(19) Europäisches Patentamt / European Patent Office / Office européen des brevets

(11) **EP 4 407 756 A1**

(12) **EUROPEAN PATENT APPLICATION**
published in accordance with Art. 153(4) EPC

(43) Date of publication:
**31.07.2024 Bulletin 2024/31**

(21) Application number: **21963603.2**

(22) Date of filing: **11.11.2021**

(51) International Patent Classification (IPC):
**H01M 50/10** (2021.01)

(52) Cooperative Patent Classification (CPC):
**H01M 50/10; H01M 50/209; H01M 50/46;
H01M 50/531; H01M 50/533; H01M 50/543;
H01M 50/586; H01M 50/593;** Y02E 60/10

(86) International application number:
**PCT/CN2021/130119**

(87) International publication number:
**WO 2023/082150 (19.05.2023 Gazette 2023/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited**
**Ningde, Fujian 352100 (CN)**

(72) Inventors:
• **XU, Hu**
**Ningde, Fujian 352100 (CN)**
• **LI, Xing**
**Ningde, Fujian 352100 (CN)**
• **JIN, Haizu**
**Ningde, Fujian 352100 (CN)**
• **NIU, Shaojun**
**Ningde, Fujian 352100 (CN)**
• **ZHAO, Fenggang**
**Ningde, Fujian 352100 (CN)**

(74) Representative: **Ran, Handong et al**
**Maucher Jenkins
Seventh Floor Offices
Artillery House
11-19 Artillery Row
London SW1P 1RT (GB)**

(54) **BATTERY CELL AND MANUFACTURING METHOD AND MANUFACTURING SYSTEM THEREFOR, BATTERY, AND POWER CONSUMPTION DEVICE**

(57)  Embodiments of the present application provide a battery cell and a manufacturing method and manufacturing system therefor, a battery, and a power consumption device. The battery cell comprises: a housing; an electrode unit accommodated in the housing and comprising a first electrode assembly and a second electrode assembly that are arranged in a first direction, the first electrode assembly and the second electrode assembly being provided in parallel, the first electrode assembly comprising a first main body and a first tab connected to the first main body, the second electrode assembly comprising a second main body and a second tab connected to the second main body, the polarities of the first tab and the second tab being the same, and at least a portion of the firs tab and at least a portion of the second tab being located between the first main body and the second main body; and a first electrode terminal provided on the housing and electrically connected to the first tab and the second tab to lead out electric energy of the first electrode assembly and the second electrode assembly. According to the embodiments of the present application, the charging and discharging performance of the battery cell can be improved.

EP 4 407 756 A1

Fig. 13

## Description

## TECHNICAL FIELD

The application relates to the field of battery technology, and in particular to a battery cell, a method and a system for manufacturing a battery cell, a battery, and an electrical device.

## BACKGROUND

Battery cells are widely used in electronic devices, such as mobile phones, laptop computers, battery carts, electric cars, electric airplanes, electric ships, electric toy cars, electric toy ships, electric toy airplanes and electric tools, etc. A battery cell may include a nickel-cadmium battery cell, a nickel-hydrogen battery cell, a lithium-ion battery cell, a secondary alkaline zinc-manganese battery cell, and the like.

During development of the battery technology, how to improve performances of a battery cell is a research direction for the battery technology.

## SUMMARY

The application provides a battery cell, a method and a system for manufacturing a battery cell, a battery, and an electrical device, which can improve performances of the battery cell.

In a first aspect, the embodiments of the present application provide a battery cell, including: a housing; an electrode unit accommodated in the housing and including a first electrode assembly and a second electrode assembly which are disposed along a first direction, wherein the first electrode assembly and the second electrode assembly are arranged in parallel, the first electrode assembly includes a first body and a first tab connected to the first body, and the second electrode assembly includes a second body and a second tab connected to the second body, and wherein a polarity of the first tab is the same as a polarity of the second tab, and at least a part of the first tab and at least a part of the second tab are located between the first body and the second body; and a first electrode terminal disposed on the housing and electrically connected to the first tab and the second tab to export electric energies of the first electrode assembly and the second electrode assembly.

In the above solution, the first electrode assembly and the second electrode assembly are arranged along the first direction X and the first tab and the second tab are located between the first body and the second body, so that the size of the battery cell along the first direction X is increased, thereby improving utilization of a space of the battery by the battery cell and improving the energy density. The first tab and the second tab can conduct a current in the first electrode assembly and a current in the second electrode assembly to the first electrode terminal respectively, so that an amount of current flowing between the first electrode assembly and the second electrode assembly can be reduced, which shortens the conduction path, reduces the internal resistance, and reduces heat generation, thereby improving charging and discharging performances of the battery cell.

In some embodiments, the electrode unit may include a first electrode piece, a second electrode piece and an isolator, wherein a polarity of the first electrode piece is opposite to a polarity of the second electrode piece, and the isolator is configured to insulate and isolate the first electrode piece from the second electrode piece. The first electrode piece includes a first coated area, a first uncoated area and a second coated area which are sequentially arranged along the first direction, wherein the first coated area and the second coated area are respectively coated with a first active material layer, while the first uncoated area is not coated with the first active material layer. The first body includes the first coated area, the second body includes the second coated area, and the first uncoated area includes the first tab and the second tab and is formed integrally.

In the above solution, the first tab and the second tab can be integrally formed, without using other means to connect the first tab and second tab, which can simplify a molding process for the electrode unit. The integral forming of the first tab and the second tab can also reduce a resistance therebetween and thus improve overcurrent capability of the electrode unit.

In some embodiments, the first electrode piece and the second electrode piece may be wound around a winding axis to form a wound structure. The first electrode piece includes a plurality of first uncoated areas which are stacked.

In some embodiments, the first electrode pieces and the second electrode pieces may be stacked alternately.

In some embodiments, the first electrode piece may be continuous and folded and includes a plurality of lamination segments and a plurality of bent segments, wherein the plurality of lamination segments and the second electrode piece are alternately stacked, and each of the bent segments is configured to connect two adjacent lamination segments. Each of the lamination segments is provided with the first uncoated area.

In some embodiments, the isolator may include a first isolation part and a second isolation part, wherein the first isolation part is configured to insulate and isolate the first coated area from the second electrode piece, and the second isolation part is configured to insulate and isolate the second coated area from the second electrode piece. A gap is formed between the first isolation part and the second isolation part for exposing the first uncoated area. The first body includes the first isolation portion, and the second body includes the second isolation portion.

In the above solution, by forming the gap between the first isolation part and the second isolation part for exposing the first uncoated area, it facilitates a connection of the first uncoated area with other conductive structures, so as to achieve exportation of current.

In some embodiments, the isolator may be integrally formed and further includes a connection part for connecting the first isolation part and the second isolation part.

In the above solution, the connection part can connect the first isolation part and the second isolation part together, which can simplify a process for assembling the isolator, the first electrode piece and the second electrode piece.

In some embodiments, the second electrode piece may include a third coated area, a second uncoated area and a fourth coated area which are sequentially arranged along the first direction, wherein the third coated area and the fourth coated area are respectively coated with a second active material layer, while the second uncoated area is not coated with the second active material layer. The first body includes the third coated area, the second body includes the fourth coated area, and the second uncoated area is provided for exporting current in the third coated area and current in the fourth coated area.

In the above solution, each of the first electrode piece and the second electrode piece is integrally formed, which can simplify a process for forming the electrode unit. The first uncoated area and the second uncoated area can export current from a central part of the of the electrode unit, which can reduce an internal resistance of the electrode unit and overcurrent capability of the electrode unit can thus be improved.

In some embodiments, the battery cell may include a plurality of electrode units, wherein the plurality of electrode units are stacked, and a direction along which the plurality of electrode units are stacked is perpendicular to the first direction.

In the above solution, by providing a plurality of electrode units, capacity of the battery cell can be increased. Since the plurality of electrode units are connected in parallel to the first electrode terminal, an internal resistance of the electrode units does not increase, so as to ensure charging and discharging performances of the battery cell.

In some embodiments, in at least one direction perpendicular to the first direction, at least a part of a projection of the first electrode terminal may be located between a projection of the first body and a projection of the second body.

In the above solution, a distance between the first electrode terminal and the first tab and a distance between the first electrode terminal and the second tab can be reduced, which helps to shorten the conduction path and simplifies an assembly process for connecting the first electrode terminal to the of the first tab and the second tab.

In some embodiments, an outer surface of the housing may include a first recess part, and at least a part of the first electrode terminal is accommodated in the first recess part.

In the above solution, by providing first recess part on the housing to provide an accommodation space for the first electrode terminal, a size of a part of the first electrode terminal which protrudes outside of the outer surface of the housing can be reduced, and thereby a volume of the battery cell can be reduced and energy density of the battery cell can be improved.

In some embodiments, the part of the first electrode terminal outside of the housing may be completely accommodated in the first recess part.

In the above solution, the part of the first electrode terminal outside of the housing is completely accommodated in the first recess part, so the first electrode terminal does not protrude from the outer surface of the housing and thus does not additionally increase the size of the battery cell, and thus the energy density of the battery cell 6 can be improved.

In some embodiments, the first recess part may be disposed at a side of the first tab in a second direction, and at least one end of the first recess part in a third direction extends to an edge of the housing. Any two of the first direction, the second direction and the third direction are perpendicular to each other.

In the above solution, at least one end of the first recess part in the third direction extends to an edge of the housing, so in a case where a plurality of battery cells are assembled, a busbar member can protrude from the edge of the housing into the first recess part, which helps to simplify a process for assembling of the busbar member and the first electrode terminal.

In some embodiments, the housing may include a first convex part at a position on an inner side corresponding to the first recess part, and at least a part of the first convex portion is located between the first body and the second body. The first electrode terminal is installed on the first convex part.

In the above solution, the first convex part plays a reinforcing role at the position of the housing where the first recess part is provided, so as to ensure a connection strength of the first electrode terminal with the housing. The setting of the first convex part can also make the first recess part concave as much as possible along a direction towards the first tab and the second tab, so as to increase a concave depth of the first recess part and thus reduce an additional space occupied by the first electrode terminal. The first convex part can also separate the first body from the second body to avoid contact between the first body and the second body to reduce a risk of short circuit.

In some embodiments, the battery cell may further include a first insulation member which is disposed on an inner surface of the first convex part to insulate and isolate the electrode unit from the first convex part.

In the above solution, by providing the first insulation member to insulate and isolate the electrode unit 10 from the first convex part, it prevents the first convex part from contacting the first electrode piece and the second electrode piece of the electrode unit, a risk of short circuit can thus be reduced.

In some embodiments, the first insulation member may be clamped between the first body and the second body.

In the above solution, the first insulation member can play a position-limiting role. When the battery vibrates, the first insulation member can reduce a vibration amplitude of the first body and the second body, to improve security of the battery cell.

In some embodiments, battery cell may further include a first adapter for connecting the first tab and the second tab to the first electrode terminal.

In the above solution, by providing the first adapter to connect the first tab and the second tab to the first electrode terminal, an installation position of the first electrode terminal become more flexible since the first adapter can be shaped based on relative locations of the first tab, the second tab and the first electrode terminal.

In some embodiments, the first electrode terminal may be disposed at a side of the first tab in a second direction. The first adapter includes a tab connection part and a terminal connection part, the tab connection part and the first tab are arranged along a third direction and connected with each other, and the terminal connection part is located between the first electrode terminal and the first tab and connected to the first electrode terminal. Any two of the first direction, the second direction and the third direction are perpendicular to each other.

In the above solution, by providing the first adapter to connect the first electrode terminal and the first tab, the first electrode terminal and the first tab can be relatively located in a more flexible manner, and thus the first electrode terminal and the first tab does not need to be arranged facing each other along the second direction, which can simplify a structure of the battery cell and simplify an assembly process for the battery cell.

In some embodiments, the first electrode assembly may further include a third tab connected to the first body, the second electrode assembly further includes a fourth tab connected to the second body, and a polarity of the third tab is the same as a polarity of the fourth tab, and the third tab and the fourth tab are located between the first body and the second body. The polarity of the third tab is opposite to the polarity of the first tab. The battery cell further includes a second electrode terminal disposed on the housing, the second electrode terminal is connected to the third tab and the fourth tab.

In the above solution, the first electrode terminal and the second electrode terminal 40 connect the first electrode assembly and the second electrode assembly in parallel, to reduce an amount of current flowing between the first electrode assembly and the second electrode assembly. In this way, even if the entirety of the battery cell is relatively longer, an internal resistance of the first electrode assembly and an internal resistance of the second electrode assembly can meet requirements, so as to reduce heat generation, and improve charging and discharging performances of the battery cell.

In some embodiments, an outer surface of the housing may include two first surfaces which are opposite in a third direction and two second surfaces which are opposite in a second direction, wherein any two of the first direction, the second direction and the third direction are perpendicular to each other. The first tab and the second tab are arranged along the second direction and spaced apart from each other, and the first electrode terminal and the second electrode terminal are arranged along the second direction and spaced apart from each other.

In some embodiments, a projection of the first electrode terminal in the second direction may be at least partially overlapped with a projection of the second electrode terminal in the second direction.

In the above solution, misalignment of the first electrode terminal and the second electrode terminal in the first direction can be reduced, and a space occupied by the first electrode terminal and the second electrode terminal can be reduced; in a case where a plurality of battery cells are connected in series, the embodiments facilitate connection of the first electrode terminal of a battery cell with the second electrode terminals of an adjacent battery cell. By overlapping the first electrode terminal and the second electrode terminal in the second direction, the first electrode terminal and the second electrode terminal can share a same space in the first direction, effectively improving space utilization, thereby improve energy density of the battery cell.

In some embodiments, the first surface may be a surface having a largest area among all surfaces of the housing.

In some embodiments, the first electrode terminal and the second electrode terminal may be provided on the two second surfaces, respectively.

In the above solution, in a case where a plurality of battery cells are arranged along the third direction, a busbar member can be disposed at a side of the battery cells in the second direction to connect the first electrode terminal of a battery cell and the second electrode terminal of an adjacent battery cell, without extending into the adjacent battery cells, which can simplify a structure of the busbar member and reduce difficulty in assembly.

In some embodiments, one of the second surfaces may include a first recess part, and the other of the second surfaces includes a second recess part. At least a part of the first electrode terminal is accommodated in the first recess part, and at least a part of the second electrode terminal is accommodated in the second recess part.

In the above solution, by providing the first recess part and the second recess part on the housing to provide accommodation spaces for the first electrode terminal and the second electrode terminal, a maximum size of the battery cell in the second direction Y can be reduced, and energy density of the battery cell can be improved.

In some embodiments, a part of the first electrode terminal outside of the housing may be completely accommodated in the first recess part, and a part of the second electrode terminal outside of the housing is completely accommodated in the second recess part.

In the above solution, neither the first electrode terminal nor the second electrode terminal protrudes from the respective second surfaces, so the size of the battery cell in the second direction will not be additionally increased, thereby improving energy density of the battery cell.

In some embodiments, in the third direction, both ends of the first recess part may extend to the two first surfaces respectively, and both ends of the second recess part may extend to the two first surfaces respectively.

In the above solution, the two ends of the first recess part form first openings on the two first surfaces respectively, through which an external busbar member can extend into the first recess part to connect to the first electrode terminal. The two ends of the second recess part form second openings on the two first surfaces respectively, through which an external busbar member can protrude into the second recess part to connect the second electrode terminal. The embodiments enable that busbar members 7 can protrude into the first recess part and the second recess part along the third direction Z, thereby simplifying a structure of the busbar member and reducing a difficulty of assembling the busbar member.

In some embodiments, the first electrode terminal and the second electrode terminal may be disposed on a same one of the first surfaces.

In some embodiments, one of the first surfaces may include a first recess part and a second recess part which are arranged along the second direction. At least a part of the first electrode terminal is accommodated in the first recess part, and at least a part of the second electrode terminal is accommodated in the second recess part.

In the above solution, by providing the first recess part and the second recess part on the housing to provide accommodating spaces for the first electrode terminal and the second electrode terminal, a maximum size of the battery cell 6 in the third direction can be reduced, and energy density of the battery cell can be improved.

In some embodiments, a part of the first electrode terminal outside of the housing may be completely accommodated in the first recess part, and a part of the second electrode terminal outside of the housing may be completely accommodated in the second recess part.

In the above solution, neither the first electrode terminal nor the second electrode terminal protrudes from the first surface, so the size of the battery cell in the third direction will not be additionally increased, thereby improving energy density of the battery cell.

In some embodiments, the first electrode terminal and the second electrode terminal may be disposed on and protrude from the one of the first surfaces. The other of first surfaces includes a first recess part and a second recess part which are arranged along the second direction, wherein the first recess part is disposed opposite to the first electrode terminal in the third direction, and the second recess part is disposed opposite to the second electrode terminal in the third direction. In a case where a plurality of battery cells are arranged along the third direction, the first recess part is configured to accommodate a first electrode terminal of an adjacent battery cell and the second recess part is configured to accommodate a second electrode terminal of the adjacent battery cell; or, in a case where a plurality of battery cells are arranged along the third direction, the first recess part is configured to accommodate a second electrode terminal of the adjacent battery cell and the second recess part is configured to accommodate a first electrode terminal of the adjacent battery cell.

In the above solution, when a plurality of battery cells are arranged along the third direction, the first recess part and the second recess part can provide accommodation spaces for the first electrode terminal and the second electrode terminal of an adjacent battery cell, which can reduce an overall size of the plurality of battery cells 6 in the third direction Z, so as to increase space utilization and improve energy density.

In some embodiments, one end of the first recess part facing away from the second recess part may extend to one of the second surfaces, and one end of the second recess part facing away from the first recess part may extend to the other of the second surfaces.

In the above solution, one end of the first recess part forms a third opening on one of the second surfaces, through which an external busbar member can protrude into the first recess part to connect to the first electrode terminal. One end of the second recess part forms a fourth opening on the other of the second surfaces, through which an external busbar member can protrude into the second recess part to connect to the second electrode terminal. The embodiments enable that busbar members can protrude into the first recess part and the second recess part along the second direction, thereby simplifying a structure of the busbar member and reducing a difficulty of assembling the busbar member.

In some embodiments, the first recess part may be connected with the second recess part.

In the above solution, the first recess part and the second recess part can be formed in a single process, so as to simplify a molding process for the housing.

In some embodiments, the first electrode terminal and the second electrode terminal may be disposed on the two first surfaces respectively.

In the above solution, a distance between the first electrode terminal and the second electrode terminal can be increased to reduce a risk of conduction between the two electrode terminals.

In some embodiments, one of the first surfaces may include a first recess part, at least a part of the first electrode terminal is accommodated in the first recess part; the second electrode terminal is disposed on and protrudes from the other of the first surfaces; and in a case where a plurality of battery cells are arranged along the third direction, the first recess part is configured to accommodate a second electrode terminal of an adjacent battery cell.

In the above solution, when a plurality of battery cells are arranged along the third direction, the first recess part can provide an accommodation space for the second electrode terminal of an adjacent battery cell, which can reduce an overall size of the plurality of battery cells in the third direction, so as to increase space utilization and improve energy density.

In some embodiments, in the second direction, at least one end of the first recess part may extend to one of the second surfaces.

In the above solution, the first recess part forms a fifth opening on the second surface, through which an external device can connect the first electrode terminal and the second electrode terminal protruding into the first recess part.

In some embodiments, the housing may include a housing body and an end cap, the housing body includes an opening, and the end cap is disposed on and covers the opening. The first electrode terminal is mounted on the housing body or the end cap.

In some embodiments, the electrode unit may include two narrower faces which are oppositely arranged along a second direction and two wider faces which are oppositely arranged along a third direction, the narrower faces respectively connect the two wider faces, and any two of the first direction, the second direction and the third direction are perpendicular to each other. An end of the housing body along the third direction includes the opening, and the wider surfaces are disposed opposite to the end cap along the third direction.

In the above solution, the housing body includes the opening at one end in the third direction, which can increase an area of the opening, so that the electrode unit can be placed in the housing body more easily.

In some embodiments, the housing body may include a flange structure at an end close to the opening, and the flange structure is located at a side of the end cap away from the electrode unit.

In the above solution, the flange structure can limit movement of the end cap toward a direction away from the electrode unit, thereby preventing the end cap from detaching from the housing body.

In some embodiments, a size of the battery cell along the first direction is w1, wherein 200mm≤w1≤2000mm.

In the above solution, the battery cells have a larger size in the first direction, so as to reduce the number of battery cells in the battery, reduce fixing structures used for fixing the battery cells, improve space utilization, and increase the energy density of the battery. Further, the first tab and the second tab can respectively conduct the current in the first electrode assembly and the current in the second electrode assembly to the first electrode terminal 30, so as to reduce an amount of current flowing between the first electrode assembly and the second electrode assembly, and by this way, even if the entirety of the battery cell is relatively longer, an internal resistance of the first electrode assembly and an internal resistance of the second electrode assembly can meet requirements, so as to reduce heat generation, and improve charging and discharging performances of the battery cell.

In some embodiments, a size of the first body along the first direction is w2, and a size of the second body along the first direction is w3, wherein w2 and w3 satisfy: 0.5≤w2/w3≤2.

In the above solution, a difference between an internal resistance of the first body and an internal resistance of the second body is reduced, and thereby consistency of charging and discharging performances of the first body and the second body can be improved.

In some embodiments, the w2 and w3 may satisfy: 0.95≤w2/w3≤1.05.

In the above solution, the internal resistance of the first body is similar to that of the second body, so as to ensure consistency of charging and discharging performances of the first body and the second body.

In some embodiments, 100mm≤w2≤1000mm.

In the above solution, the value of w2 is set to be greater than or equal to 100 mm to ensure the size of the battery cell along the first direction, and thereby space utilization can be improved and energy density of the battery can be increased. In the embodiments, the value of w2 is set to be less than or equal to 1000mm to avoid the internal resistance of the first electrode assembly being too large, such that the internal resistance of the first electrode assembly can meet requirements, and thereby heat generation can be reduced, and charging and discharging performances of the battery cell 6 can be improved.

In a second aspect, the embodiments of the present application provide a battery, including the battery cell according to any one of the embodiments of the first aspect.

In a third aspect, the embodiments of the present application provide an electrical device, including the battery cell according to any one of the embodiments of the first aspect, wherein the battery cell is provided for supplying electrical energies.

In a fourth aspect, the embodiments of the present application provide a method for manufacturing a battery cell, including:

proving an electrode unit, the electrode unit including a first electrode assembly and a second electrode assembly which are disposed along a first direction, wherein the first electrode assembly and the second electrode assembly are arranged in parallel, the first electrode assembly includes a first body and a first tab connected to the first body, and the second electrode assembly includes a second body and a second tab connected to the second body, and wherein a polarity of the first tab is the same as a polarity of the second tab, and at least a part of the first tab and at least a part of the second tab are located between the first body and the second body;

providing a housing and a first electrode terminal installed on the housing; and installing the electrode unit in the housing, and

electrically connecting the first electrode terminal with the first tab and the second tab, so as to export electric energies of the first electrode assembly and the second electrode assembly.

In a fifth aspect, the embodiments of the present application provide a system for manufacturing a battery cell, including:

a first providing device configured to provide an electrode unit including a first electrode assembly and a second electrode assembly which are disposed along a first direction, wherein the first electrode assembly and the second electrode assembly are arranged in parallel, the first electrode assembly includes a first body and a first tab connected to the first body, and the second electrode assembly includes a second body and a second tab connected to the second body, and wherein a polarity of the first tab is the same as a polarity of the second tab, and at least a part of the first tab and at least a part of the second tab are located between the first body and the second body;

a second providing device configured to provide a housing and a first electrode terminal installed on the housing; and

an assembling device configured to install the electrode unit in the housing, and electrically connect the first electrode terminal with the first tab and the second tab so as to export electrical energies of the first electrode assembly and the second electrode assembly.

**BRIEF DESCRIPTION OF THE DRAWINGS**

In order to provide clear description of technical solutions of the embodiments of the present application, accompanying drawings required in the embodiments will be briefly descried. Obviously, the following described drawings only illustrate certain embodiments of the present application, and for those skilled in the art, other drawings can also be obtained based on these drawings without inventive efforts.

Fig. 1 is a schematic structural diagram of a vehicle according to some embodiments of the present application;
Fig. 2 is a schematic explosion diagram of a battery according to some embodiments of the present application;
Fig. 3 is a schematic cross-sectional view of a battery cell according to some embodiments of the present application;
Fig. 4 is a schematic structural diagram of an electrode unit of the battery cell shown in Fig. 3;
Fig. 5 is a schematic cross-sectional view of the electrode unit along a line B-B shown in Fig. 4;
Fig. 6 is a schematic structural view of the first electrode piece shown in Fig. 5;
Fig. 7 is a schematic structural diagram of the second electrode piece shown in Fig. 5;
Fig. 8 is a schematic structural diagram of the isolator shown in Fig. 5 in an expanded state;
Fig. 9 is another schematic cross-sectional view of the electrode unit along the line B-B shown in Fig. 4;
Fig. 10 is a schematic structural view of the first electrode piece shown in Fig. 9 in an expanded state;
Fig. 11 is another schematic cross-sectional view of the electrode unit along the line B-B shown in Fig. 4;
Fig. 12 is a schematic structural view of the first electrode piece shown in Fig. 11 in an expanded state;
Fig. 13 is a schematic enlarged diagram of the battery cell at a block A shown in Fig. 3;
Fig. 14 is a schematic cross-sectional view of a plurality of battery cells shown in Fig. 3 after being assembled;
Fig. 15 is a schematic cross-sectional view of a battery cell according to some other embodiments of the present application;
Fig. 16 is a structural schematic diagram of a plurality of battery cells shown in Fig. 15 after being assembled;
Fig. 17 is a schematic cross-sectional view of a battery cell according to some other embodiments of the present application;
Fig. 18 is a schematic cross-sectional view of a battery cell according to some other embodiments of the present application;
Fig. 19 is a schematic cross-sectional view of a battery cell according to some other embodiments of the present application;
Fig. 20 is a schematic structural diagram of a plurality of battery cells shown in Fig. 19 after being assembled;
Fig. 21 is a schematic cross-sectional view of a battery cell according to some other embodiments of the present application;
Fig. 22 is a schematic flowchart of a method for manufacturing a battery cell according to some embodiments of the present application;
Fig. 23 is a schematic block diagram of a system for manufacturing a battery cell according to some embodiments of the present application.

In the drawings, the drawings are not drawn to scale.

## DETAILED DESCRIPTION

In order to make purposes, technical solutions, and advantages of the embodiments of the present application clearer, the technical solutions in the embodiments of the present application will be clearly described in conjunction with accompanying drawings. Obviously, the described embodiments are only a part of the embodiments of the present application, not all of the embodiments. Based on the embodiments in the present application, all other embodiments obtained by those skilled in the art without inventive efforts also fall within a protection scope of the present application.

Unless otherwise defined, all technical and scientific terms used in the present application have the same meanings as those commonly understood by those skilled in the art; the terms used in the specification of the present application are described only for the purpose of describing specific embodiments and are not intended to limit the present application; the terms "including" and "comprising" in the description and claims as well as the accompanying drawings of the present application and any variations thereof are intended to cover non-exclusive inclusion. The terms "first", "second", etc. in the description and claims as well as the accompanying drawings of the present application are intended to distinguish different objects, rather than to describe specific sequence or primary and secondary relationship.

The reference to "embodiment" in the present application means that specific features, structures, or characteristics described in conjunction with the embodiment can be included in at least one of the embodiments of the present application. The phrase mentioned in various positions in the description does not necessarily refer to a same embodiment, and does not refer to an independent or alternative embodiment that is mutually exclusive with other embodiments.

In the description of the present application, it should be noted that unless otherwise specified and limited, the terms "installation", "connection", "connecting", and "attachment" should be broadly understood, for example, they may refer to a fixed connection, a detachable connection, or an integrated connection; they may refer to a direct connection, an indirect connection through an intermediate medium, or a connection between interiors of two elements. For those skilled in the art, specific meanings of the above terms in the present application can be understood according to specific circumstances.

The term "and/or" in the present application is provided only for describing an association relationship of associated objects, indicating three types of relationships. For example, "A and/or B" may indicate existence of A alone, existence of A and B simultaneously, and existence of B alone. In addition, the character "/" in the present application generally indicates that the associated objects are in an "or" relationship.

In the embodiments of the present application, the term "parallel" includes not only absolutely parallel, but also roughly parallel as commonly known in the art; moreover, the term "perpendicular" includes not only absolutely perpendicular, but also roughly perpendicular as commonly known in the art.

In the embodiments of the present application, same components are denoted by a same reference numeral, and for clarity, detailed descriptions for the same components may be omitted in different embodiments. It should be understood that a thickness, length, width, and any other dimensions of various components as well as an overall thickness, length, width, and any other dimensions of an integrated device in the embodiments of the present application as shown in the accompanying drawings are provided only for illustration and do not constitute any limitations of the present application.

The term "a plurality of' in the present application refers to two or more (including two).

In the present application, a battery cell may include a lithium-ion secondary battery cell, a lithium-ion primary battery cell, a lithium-sulfur battery cell, a sodium-lithium-ion battery cell, a sodium-ion battery cell, or a magnesium-ion battery cell, and the like, and the embodiments of the present application are not limited in this respect.

The battery mentioned in the embodiments of the present application refers to a single physical module that includes one or more battery cells to provide a higher voltage and capacity. For example, the battery mentioned in the present application may include a battery module or a battery pack, etc. Generally, the battery includes a box for packaging one or more battery cells. The box can prevent liquids or other foreign objects from affecting charging or discharging of the battery cells.

The battery cell includes an electrode unit and electrolyte, and the electrode unit includes a positive electrode piece, a negative electrode piece, and an isolator. The battery cell mainly relies on metal ions moving between the positive electrode piece and negative electrode piece to function. The positive electrode piece includes a positive current collector and a positive active material layer, and the positive active material layer is coated on a surface of the positive current collector; the positive current collector includes a positive current collection part and a positive tab, and the positive current collection part is coated with the positive active material layer, while the positive tab is not coated with the positive active material layer. Taking a lithium-ion battery cell as an example, the positive current collector may be made of aluminum, and the positive active material layer includes a positive active material which may be lithium cobalt oxide, lithium iron phosphate, ternary lithium or lithium manganese oxide. The negative electrode piece includes a negative current collector and a negative active material layer, and the negative active material layer is coated on a surface of the negative current collector; the negative current collector includes a negative current collection part and a negative tab, and the negative current collection part is coated with the negative active material layer, while the negative tab is not coated with the negative active material layer. The negative current collector may be made of copper, and the negative active material layer include a negative active material which may be carbon or silicon. The isolator may be made of PP (polypropylene) or PE (polyethylene), or the like.

With development of the battery technology, users have higher and higher requirements on capacity of a battery. For example, with continuous popularization of new energy vehicles, requirements on use of a battery in a new energy vehicle are becoming higher and higher. With continuous improvement of users' requirements on mileage of a new energy vehicle, capacity of a battery used in the new energy vehicle needs to be continuously improved; and moreover, during use of the battery, internal consumption and heat caused by its internal resistance is required to be reduced as much as possible.

Generally, a battery includes a box and a plurality of battery cells accommodated within the box body. The box is usually equipped with fixed structures for supporting and fixing the battery cells. For a battery, under a premise of a certain capacity of the battery, the smaller the size of the battery cell, the more the number of battery cells, and more fixed structures need to be set up in the box to fix the battery cells. This will result in a lower utilization of an internal space of the battery, resulting in that an energy density of the battery cannot meet requirements.

In order to simplify a structure of the battery and improve its energy density, inventors attempted to increase a size of an individual battery cell to reduce the number of battery cells in the battery, and simplify the fixed structures inside the box to improve utilization of the internal space of the battery.

However, the inventors found that the larger the size of a battery cell, the larger the size of an electrode piece of an electrode unit in the batter cell, which leads to a longer conduction path and a higher internal resistance of the electrode piece, resulting in lower power of the battery cell. Due to the longer conduction path of the electrode piece, a current density through the electrode piece is uneven during a charging or discharging process and the electrode piece is severely heated in an area with a higher current, leading to a risk of lithium evolution.

In view of this, the embodiments of the present application provide a technical solution, in which the battery cell includes a housing, an electrode unit, and a first electrode terminal. The electrode unit is accommodated within the housing, and includes a first electrode assembly and a second electrode assembly which are disposed along a first direction, wherein the first electrode assembly and the second electrode assembly are arranged in parallel, the first electrode assembly includes a first body and a first tab connected to the first body, and the second electrode assembly includes a second body and a second tab connected to the second body, and wherein a polarity of the first tab is the same as a polarity of the second tab, and at least a part of the first tab and at least a part of the second tab are located between the first body and the second body. The first electrode terminal is disposed on the housing and electrically connected to the first tab and the second tab to export electric energies of the first electrode assembly and the second electrode assembly. In the technical solution, the first tab and the second tab are located at a central part of the electrode unit, and can export a current from the first electrode assembly and a current from the second electrode assembly, respectively, which can shorten the conduction path, reduce the internal resistance, and reduce heat generation, and thereby improve charging and discharging performances of the battery cell.

The technical solution described in the embodiments of the present application is applicable to a battery and an electrical device using a battery.

The electrical device may be a vehicle, a mobile phone, a portable device, a laptop, a ship, a spacecraft, an electric toy, an electric tool, and so on. The vehicle may be a fuel powered vehicle, a gas powered vehicle, or a new-energy powered vehicle. The new-energy powered vehicle may be a pure electric vehicle, a hybrid electric vehicle, or a range extended electric vehicle, etc.; the spacecraft may include an airplane, a rocket, a space shuttle, and a spaceship, etc.; the electric toy may include a fixed or mobile electric toy, such as a game machine, an electric car toy, an electric boat toy, an electric aircraft toy, etc.; the electric tool may include an electric metal cutting tool, an electric grinding tool, an electric assembly tool, and an electric tool for railway usage, such as an electric drill, an electric grinder, an electric wrench, an electric screwdriver, an electric hammer, an impact drill, a concrete vibrator, and an electric planer. The embodiments of the present application do not impose special restrictions on the above-mentioned electrical device.

For convenience of description, the embodiments are described below by taking an electrical device being a vehicle as an example.

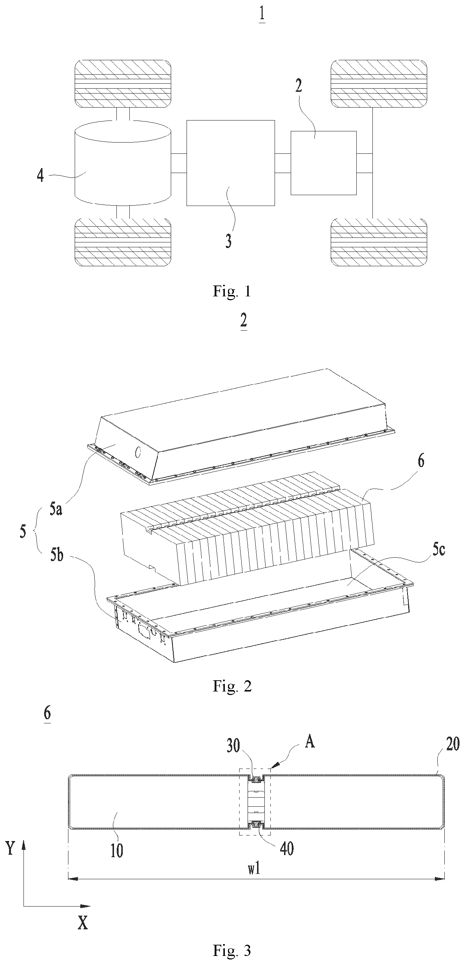

Fig. 1 is a structural schematic diagram of a vehicle according to some embodiments of the present application.

As shown in Fig. 1, an interior of the vehicle 1 is equipped with a battery 2, which may be installed at the bottom, head, or tail of the vehicle 1. The battery 2 is provided for supplying power for the vehicle 1, for example, the battery 2 may serve as an operating power source of the vehicle 2.

The vehicle 1 may also include a controller 3 and a motor 4. The controller 3 is provided for controlling the battery 2 to supply power to the motor 4, so as to meet operation power demands of the vehicle 1 for starting, navigation and driving, for example.

In some embodiments of the present application, the battery 2 may not only serve as the operating power source for the vehicle 1, but also as a driving power source for the vehicle 1, in order to replace or partially replace fuel or natural gas to provide driving power for the vehicle 1.

Fig. 2 is a schematic explosion diagram of a battery according to some embodiments of the present application.

As shown in Fig. 2, the battery 2 includes a box 5 and a battery cell 6, wherein the battery cell 6 is accommodated in the box 5.

The box 5 is provided for accommodating the battery cell 6, and the box 5 may adopt various structures. In some embodiments, the box 5 may include a first box part 5a and a second box part 5b, which, when put together, jointly define an accommodation space 5c for accommodating the battery cell 6. The second box part 5b may be a hollow structure with one side being open, and the first box part 5a may be a plate-like structure, and when the first box part 5a is put on and covers the open side of the second box part 5b, the box 5 having the accommodation space 5c is formed; alternatively, both the first box part 5a and the second box part 5b may be a hollow structure with one side being open, and when the open side of the first box portion 5a is put on and covers the open side of the second box part 5b , the box 5 having the accommodation space 5c is formed. Certainly, the first box part 5a and the second box part 5b may be in various shapes, such as a cylinder, a cuboid, and the like.

In order to improve airtightness after connection of the first box part 5a and the second box part 5b, a sealant element, such as sealant, a sealing ring, etc., may be provided between the first box part 5a and the second box part 5b.

Assuming that the first box part 5a covers the top of the second box part 5b, the first box part 5a may also be called as an upper box cover, and the second box part 5b may also be called as a lower box body.

In the battery 2, there may be one battery cell 6, or there may be a plurality of battery cells 6. In a case where there are a plurality of battery cells 6, the plurality of battery cells 6 may be connected in series, in parallel or in hybrid. Hybrid connection refers to both series and parallel connections among the plurality of battery cells 6.

The plurality of battery cells 6 may be directly connected in series or parallel or in hybrid, and an entirety including the battery cells 6 is then placed in the box 5; alternatively, some of the battery cells 6 may first be connected in series or parallel or in hybrid to form a battery module, and a plurality of such battery modules are then be connected in series or parallel or in hybrid to form an entirety, which is then placed in the box 5.

In some embodiments, an entirety including the battery cells 6 is directly installed in the box 5, which can save a process of combining multiple battery cells 6 into a battery module and save a fixing frame for fixing the battery cells 6 in the battery module, thereby simplifying a structure of the battery and improving an energy density of the battery.

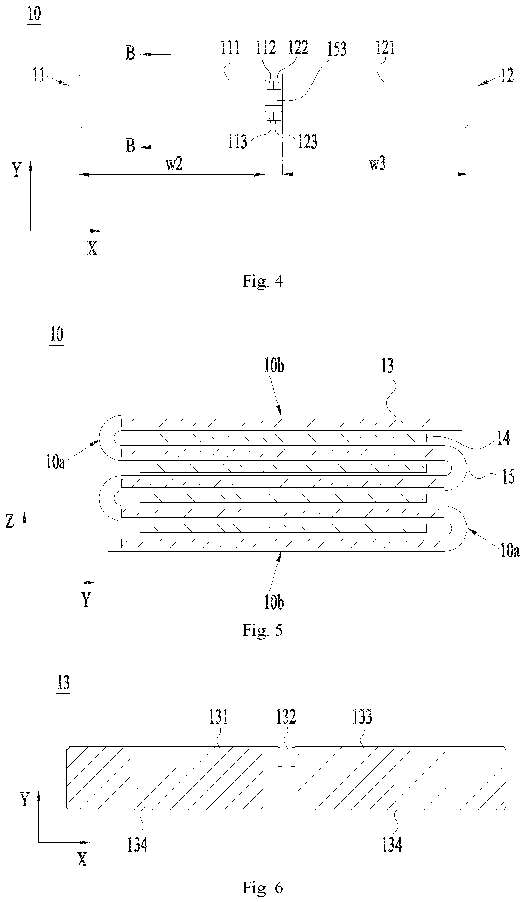

Fig. 3 is a schematic cross-sectional view of a battery cell according to some embodiments of the present application; and Fig. 4 is a schematic structural view of an electrode unit of the battery cell shown in Fig. 3.

As shown in Figs. 3 and 4, the embodiments of the present application provide a battery cell 6, which includes an electrode unit 10, a housing 20 and a first electrode terminal 30. The electrode unit 10 is accommodated in the housing 20 and includes a first electrode assembly 11 and a second electrode assembly 12 which are arranged along a first direction X, wherein the first electrode assembly 11 and the second electrode assembly 12 are arranged in parallel, the first electrode assembly 11 includes a first body 111 and a first tab 112 connected to the first body 111, and the second electrode assembly 12 includes a second body 121 and a second tab 122 connected to the second body 121, and wherein a polarity of the first tab 112 is the same as a polarity of the second tab122, and at least a part of the first tab 112 and at least a part of the second tab 122 are located between the first body 111 and the second body 121. The first electrode terminal 30 is disposed on the housing 20 and is electrically connected to the first tab 112 and the second tab 122 to export electric energies of the first electrode assembly 11 and the second electrode assembly 12.

The housing 20 is a hollow structure, and includes an accommodating cavity for accommodating the electrode unit 10 and electrolyte at interior of the housing 20. The housing 20 may be in various shapes, such as cylinder, cuboid and so on. The shape of the housing 20 may be determined according to a specific shape of the electrode unit 10. For example, if the electrode unit 10 is a cylindrical structure, a cylindrical structure may be selected for the housing; or if the electrode unit 10 is a cuboid structure, a cuboid structure may be selected for the housing.

The electrode unit 10 is a core component for the battery cell 6 to realize charging and discharging functions, and the electrode unit 10 includes a first electrode piece, a second electrode piece and an isolator, wherein a polarity of the first electrode piece is opposite to a polarity of the second electrode piece, and the isolator is configured to insulate and isolate the first electrode piece from the second electrode piece. The electrode unit 10 mainly relies on metal ions moving between the first electrode piece and the second electrode piece to function.

One of the first electrode piece and the second electrode piece is a positive electrode piece, and the other of the first electrode piece and the second electrode piece is a negative electrode piece.

There may be one electrode unit 10 or a plurality of electrode units 10, which is not limited in the embodiments.

The first body 111 is an electric power generating part of the first electrode assembly 11, and includes an active material therein for being electrochemically reacted with electrolyte or the like to achieve a charging or discharging process. The first tab 112 is provided to electrically connect the first body 111 to the first electrode terminal 30 so as to export generated electric energies.

Likewise, the second body 121 is an electric power generating part of the second electrode assembly 12, and includes an active material therein for being electrochemically reacted with electrolyte or the like to achieve a charging or discharging process. The second tab 122 is provided to electrically connect the second body 121 to the first electrode terminal 30 to export generated electric energies.

The first tab 112 is drawn out from an end surface of the first body 111 facing the second body 121, and the second tab 122 is drawn out from an end surface of the second body 121 facing the first body 111. In the first direction X, the first tab 112 may be entirely located between the first body 111 and the second body 121, or may be only partially located between the first body 111 and the second body 121. Likewise, in the first direction X, the second tab 122 may be entirely located between the first body 111 and the second body 121, or may be only partially located between the first body 111 and the second body 121.

There may be one first electrode assembly 11, or there may be a plurality of first electrode assemblies. In a case where there are a plurality of first electrode assemblies 11, the plurality of first electrode assemblies 11 may be stacked, and a direction along which the plurality of first electrode assemblies 11 are stacked may be perpendicular to the first direction X.

There may be one second electrode assembly 12, or there may be a plurality of second electrode assemblies 12. In a case where there are a plurality of second electrode assemblies 12, the plurality of second electrode assemblies 12 may be stacked, and a direction along which the plurality of second electrode assemblies 12 are stacked may be perpendicular to the first direction X.

The first electrode terminal 30 is electrically connected to the first tab 112 and the second tab 122 to connect the first electrode assembly 11 and the second electrode assembly 12 in parallel. The first tab 112 and the second tab 122 may be directly connected, or indirectly connected through other conductive structures.

The first tab 112 and the second tab 122 may be integrally formed or separated formed. For example, when the first tab 112 and the second tab 122 are separate structures, the first tab 112 and the second tab 122 may be directly connected by means of welding or the like, or may be connected through other members (such as an adapter described later).

The first electrode assembly 11 and the second electrode assembly 12 may be two structures independent from each other, and should be connected by other processes (such as welding) or through other components. Of course, alternatively, the first electrode assembly 11 and the second electrode assembly 12 may be an integrated structure, and may be directly connected during molding without other processes (such as welding) or through other components.

In the embodiments, the first electrode assembly 11 and the second electrode assembly 12 are arranged along the first direction X and the first tab 112 and the second tab 122 are located between the first body 111 and the second body 121, so that the size of the battery cell 6 along the first direction X is increased, thereby improving utilization of a space of the battery by the battery cell 6 and improving the energy density. The first tab 112 and the second tab 122 can conduct a current in the first electrode assembly 11 and a current in the second electrode assembly 12 to the first electrode terminal 30 respectively, so that an amount of current flowing between the first electrode assembly 11 and the second electrode assembly 12 can be reduced, which shortens the conduction path, reduces the internal resistance, and reduces heat generation, thereby improving charging and discharging performances of the battery cell 6.

In some embodiments, the size of the battery cell 6 along the first direction X may be w1, wherein $200mm \leq w1 \leq 2000mm$. Optionally, the w1 may have a value of 200mm, 400mm, 500mm, 1000mm, 1200mm, 1500mm or 2000mm.

Exemplarily, the w1 satisfies: $400mm \leq w1 \leq 1200mm$.

Exemplarily, the first direction X is parallel to a length direction of the battery cell 6.

In the embodiments, the battery cells 6 have a larger size in the first direction X, so as to reduce the number of battery cells 6 in the battery, reduce fixing structures used for fixing the battery cells 6, improve space utilization, and increase the energy density of the battery. Further, the first tab 112 and the second tab 122 can respectively conduct the current in the first electrode assembly 11 and the current in the second electrode assembly 12 to the first electrode terminal 30, so as to reduce an amount of current flowing between the first electrode assembly and the second electrode assembly 12, and by this way, even if the entirety of the battery cell 6 is relatively longer, an internal resistance of the first electrode assembly 11 and an internal resistance of the second electrode assembly 12 can meet requirements, so as to reduce heat generation, and improve charging and discharging performances of the battery cell 6.

In some embodiments, the size of the battery cell 6 is long enough to match the size of the box, such that a plurality of battery cells 6 can be directly arranged side by side in the box without a need to first assembling the battery cells 6 into battery modules. In this way, a frame structure for fixing the battery cells 6 in the battery module can be omitted, thereby saving an internal space of the battery, improving space utilization and energy density of the battery, simplifying assembly process for the battery cells 6, and in turn cost can be reduced.

In some embodiments, the size of the first body 111 along the first direction X may be w2, the size of the second body 121 along the first direction X may be w3, wherein the w2 and w3 satisfy: $0.5 \leq w2/w3 \leq 2$.

Optionally, the w2/w3 may be a value of 0.5, 0.7, 0.9, 1, 1.1, 1.5 or 2.

In the embodiments, a difference between an internal resistance of the first body 111 and an internal resistance of the second body 121 is reduced, and thereby consistency of charging and discharging performances of the first body 111 and the second body 121 can be improved.

In some embodiments, the w2 and w3 satisfy: $0.95 \leq w2/w3 \leq 1.05$. Optionally, w2=w3.

In the embodiments, the internal resistance of the first body 111 is similar to that of the second body 121, so as to ensure consistency of charging and discharging performances of the first body 111 and the second body 121.

In some embodiments, the w2 satisfies $100mm \leq w2 \leq 1000mm$.

Optionally, the w2 may have a value of 100mm, 200mm, 500mm or 1000mm.

Exemplarily, the w2 satisfies: $200mm \leq w1 \leq 500mm$.

In the embodiments, the value of w2 is set to be greater than or equal to 100 mm to ensure the size of the battery cell 6 along the first direction X, and thereby space utilization can be improved and energy density of the battery can be increased. In the embodiments, the value of w2 is set to be less than or equal to 1000mm to avoid the internal resistance of the first electrode assembly 11 being too large, such that the internal resistance of the first electrode assembly 11 can meet requirements, and thereby heat generation can be reduced, and charging and discharging performances of the battery cell 6 can be improved.

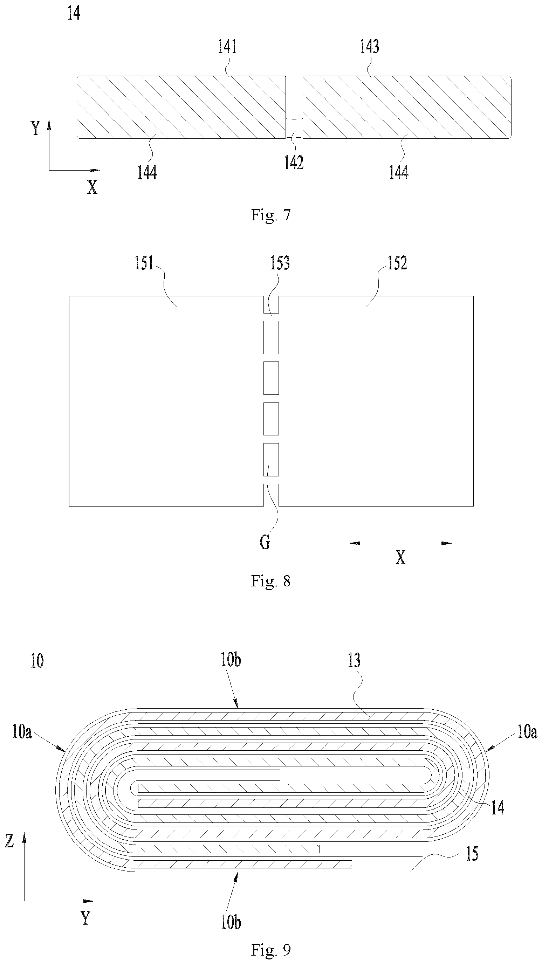

Fig. 5 is a schematic cross-sectional view of the electrode unit along a line B-B shown in Fig. 4; Fig. 6 is a schematic structural view of the first electrode piece shown in Fig. 5; Fig. 7 is a schematic structural view of the second electrode piece shown in Fig. 5; and Fig. 8 is a schematic structural view of the isolator shown in Fig. 5 in an expanded state.

As shown in Figs. 4 to 8, in some embodiments, the electrode unit 10 includes first electrode pieces 13, second electrode pieces 14 and an isolator 15, wherein a polarity of the first electrode piece 13 is opposite to a polarity of the second electrode piece 14, and the isolator 15 is configured to insulate and isolate the first electrode pieces 13 from the second electrode pieces 15. The first electrode piece 13 includes a first coated area 131, a first uncoated area 132 and a second coated area 133 which are sequentially arranged along the first direction X, wherein the first coated area 131 and the second coated area 133 are respectively coated with a first active material layer 134, while the first uncoated area 132 is not coated with a first active material layer 134. The first body 111 includes the first coated area 131, the second body 121 includes the second coated area 133, and the first uncoated area 132 includes the first tab 112 and the second tab 122 and is formed integrally.

The first coated area 131 includes a first current collector and a first active material layer 134 coated on a surface of the first current collector, and the second coated area 133 includes a second current collector and a first active material layer 134 coated on the second current collector. The first current collector, the first uncoated area 132 and the second current collector are different parts of an integrally formed metal foil.

In a case where the first electrode piece 13 functions as a positive electrode piece, the first current collector, the first uncoated area 132 and the second current collector are integrally formed by aluminum foil, and the first active material layer 134 includes a positive electrode active material, which may be lithium cobalt oxide, lithium iron phosphate, ternary lithium or lithium manganate, etc. In a case where the first electrode piece 13 functions as a negative electrode piece, the first current collector, the first uncoated area 132 and the second current collector are integrally formed by a copper foil, and the first active material layer 134 includes a negative electrode active material, which may be carbon or silicon etc.

The first active material layer 134 in the first coated area 131 and the first active material layer 134 of the second coated area 133 may be the same or different.

In the embodiments, a structure of the second electrode piece 14 is not limited, and the second electrode piece 14 may be an integral structure or may include separate structures.

In the embodiments, the first tab 112 and the second tab 122 can be integrally formed without using other elements for connecting the first tab 112 and the second tab 122, so a process for forming the electrode unit 10 can be simplified. Further, the integrally forming of first tab 112 and the second tab 122 can also reduce a resistance between them and improve overcurrent capability of the electrode unit 10.

In some embodiments, the second electrode piece 14 includes a third coated area 141, a second uncoated area 142 and a fourth coated area 143 which are sequentially arranged along the first direction X, wherein the third coated area 141 and the fourth coated area 143 are respectively coated with a second active material layer 144, while the second uncoated area 142 is not coated with a second active material layer 144. The first body 111 includes the third coated area 141, the second body 121 includes the fourth coated area 143, and the second uncoated area 142 is provided for exporting current in the third coated area 141 and current in the fourth coated area 143.

The third coated area 141 includes a third current collector and a second active material layer 144 coated on a surface of the third current collector, and the fourth coated area 143 includes a fourth current collector and a second active material layer 144 coated on the surface of the fourth current collector. The third current collector, the second uncoated area 142 and the fourth current collector are different parts of an integrally formed metal foil.

The second active material layer 144 of the third coated area 141 and the second active material layer 144 of the fourth coated area 143 may be the same or different. For example, the second active material layer 144 in the third coated area 141 and the second active material layer 144 in the fourth coated area 143 may contain the same active material, or may contain different active materials respectively.

Exemplarily, the battery cell further includes a second electrode terminal for electrically connecting with the second uncoated area 142, so as to export current in the third coated area 141 and current in the fourth coated area 143.

The first coated area 131 and the third coated area 141 are disposed stacked, so that metal ions move between the first coated area 131 and the third coated area 141 to realize charging and discharging functions of the first electrode assembly 11. The second coated area 133 and the fourth coated area 143 are stacked, so that metal ions move between the second coated area 133 and the fourth coated area 143 to realize charging and discharging functions of the second electrode assembly 12. That is to say, the first electrode assembly 11 and the second electrode assembly 12 can independently realize the charging and discharging functions.

In the embodiments, each of the first electrode pieces 13 and the second electrode pieces 14 is integrally formed, so a process for forming the electrode unit 10 can be simplified. The first uncoated area 132 and the second uncoated area 142 can export current from a central part of the electrode unit 10, so an internal resistance of the electrode unit 10 can be reduced and overcurrent capability of the electrode unit 10 can be improved.

In some embodiments, the isolator 15 includes a first isolation part 151 and a second isolation part 152, wherein the first isolation part 151 is provided for insulating and isolating the first coated area 131 from the second electrode piece 14, and the second isolation part 152 is provided for insulating and isolating the second coated area 133 from the second electrode piece 14. There is a gap G formed between the first isolation part 151 and the second isolation part 152 for exposing the first uncoated area 132. The first body 111 includes the first isolation part 151, and the second body 121 includes the second isolation part 152.

The isolator 15 includes a microporous structure, and metal ions can pass through the isolator 15.

The first isolation part 151 and the second isolation part 152 may be provided separately from each other, or may be connected as a whole.

The first body 111 includes the first coated area 131, the third coated area 141, and the first isolation part 151, and the first isolation part 151 is located between the first coated area 131 and the third coated area 141 for insulating and isolating the first coated area 131 from the third coated area 141. The second body 121 includes the second coated area 133, the fourth coated area 143, and the second isolation part 152, and the second isolation part 152 is located between the second coated area 133 and the fourth coated area 143 for insulating and isolating the second coated area 133 from the fourth coated area 143.

In the embodiments, by forming the gap G between the first isolation portion 151 and the second isolation portion 152 for exposing the first uncoated area 132, it facilitates a connection of the first uncoated area 132 with other conductive structures, so as to realize exportation of current.

In some embodiments, the gap G between the first isolation part 151 and the second isolation part 152 also exposes the second uncoated area 142.

In some embodiments, the isolator 15 is integrally formed and further includes a connection part 153 for connecting the first isolation part 151 and the second isolation part 152.

In the embodiments, the connection part 153 can connect the first isolation part 151 and the second isolation part 152 together, which can simplify a process for assembling the isolator 15, the first electrode pieces 13 and the second electrode pieces 14.

Each of the first electrode pieces 13, the second electrode pieces 14 and the isolator 15 is integrally arranged, so that the first electrode assembly 11 and the second electrode assembly 12 of the electrode unit 10 can be formed synchronously, thereby simplifying a process for forming the electrode unit 10.

After forming of the electrode unit 10, along the second direction Y, the first uncoated area 132 and the second uncoated area 142 are located at both sides of the connection part 153 respectively.

In some embodiments, the first electrode pieces 13 and the second electrode pieces 14 are stacked alternately.

Exemplarily, the first electrode pieces 13 and the second electrode piece 14 are stacked alternately along a third direction Z, which is perpendicular to the first direction X.

The first uncoated areas 132 of the plurality of first electrode pieces 13 are stacked, and the second uncoated areas 142 of the plurality of second electrode pieces 14 are stacked.

In some embodiments, there are a plurality of isolators 15, which are arranged between the first electrode pieces 13 and the second electrode pieces14 to isolate the first electrode pieces 13 from the second electrode pieces 14.

In some embodiments, the electrode unit 10 includes two narrower faces 10a oppositely arranged along a second direction Y and two wider faces 10b oppositely arranged along a third direction Z, and the narrower faces 10a respectively connects the two wider faces 10b, and any two of the first direction X, the second direction Y and the third direction Z are perpendicular to each other. Exemplarily, the wider surface 10b has a larger area than the narrower surface 10a, and substantially is a plane.

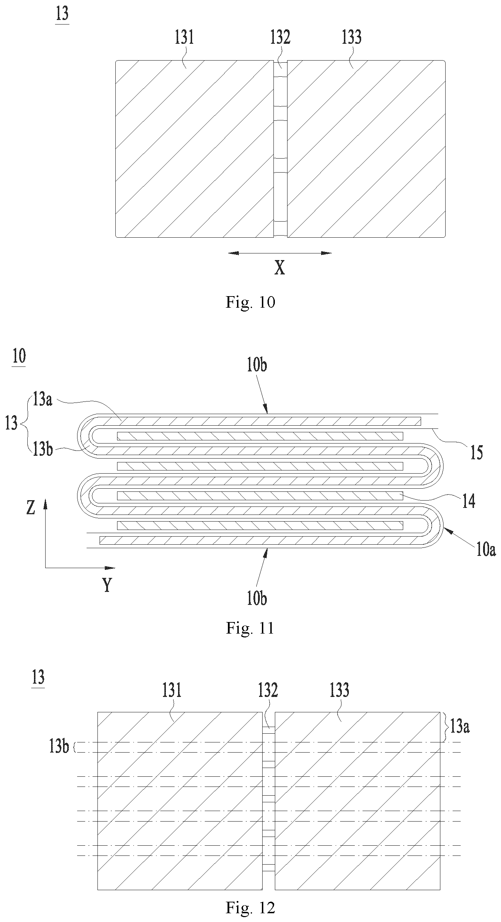

Fig. 9 is another schematic cross-sectional view of the electrode unit along the line B-B shown in Fig. 4; and Fig. 10 is a schematic structural view of the first electrode piece shown in Fig. 9 in an expanded state.

As shown in Fig. 9, the first electrode piece 13 and the second electrode piece 14 are wound around a winding axis to form a wound structure. The first electrode piece 13 includes a plurality of first uncoated areas 132 which are stacked.

Exemplarily, the winding axis is parallel to the first direction X.

In the embodiments, by providing the plurality of first uncoated areas 132, overflow capacity of the electrode unit 10 can be improved.

In some embodiments, the second electrode piece 14 includes a plurality of second uncoated areas which are stacked.

In some embodiments, the electrode unit 10 is substantially flat and includes two narrower surfaces 10a oppositely arranged along the second direction Y and two wider surfaces 10b oppositely arranged along the third direction Z, and the narrower surface 10a respectively connects the two wider surfaces 10b, and any two of the first direction X, the second direction Y and the third direction Z are perpendicular to each other. The wider surface 10b is substantially a flat surface, and at least a part of the narrower surface 10a is arc-shaped. The wide surface 10b includes a larger area than the narrower surface 10a.

FIG. 11 is another schematic cross-sectional view of the electrode unit along the line B-B shown in Fig. 4; and Fig. 12 is a schematic structural view of the first electrode piece shown in Fig. 11 in an expanded state.

As shown in Fig. 11 and Fig. 12, the first electrode piece 13 is continuous and folded and includes a plurality of lamination segments 13a and a plurality of bent segments 13b, wherein the plurality of lamination segments 13a and the second electrode piece 14 are alternately stacked, and each of the bent segments 13b is configured to connect two adjacent lamination segments 13a. Each of the lamination segments 13a is provided with the first uncoated area 132.

Exemplarily, the plurality of lamination segments 13a and the plurality of second electrode pieces 14 are alternately stacked along the third direction Z. The first uncoated areas 132 of the plurality of lamination segments 13a are stacked along the third direction Z.

In some embodiments, there are two isolators 15, and the first electrode pieces 13 are located between the two isolators 15.

In some embodiments, the electrode unit 10 includes two narrower faces 10a oppositely arranged along the second direction Y and two wider faces 10b oppositely arranged along the third direction Z, and the narrower faces 10a respectively connect the two wider faces 10b, and any two of the first direction X, the second direction Y and the third direction Z are perpendicular to each other. Exemplarily, the wider surface 10b includes a larger area than the narrower surface 10a, and is substantially a plane.

In some embodiments, there may be a plurality of electrode units 10, and the plurality of electrode units 10 are stacked, and a direction along which the plurality of electrode units 10 are stacked is perpendicular to the first direction X.

In the embodiments, by providing a plurality of electrode units 10, capacity of the battery cell 6 can be increased. Since the plurality of electrode units 10 are connected in parallel to the first electrode terminal, an internal resistance of the electrode units 10 does not increase, so as to ensure charging and discharging performances of the battery cell.

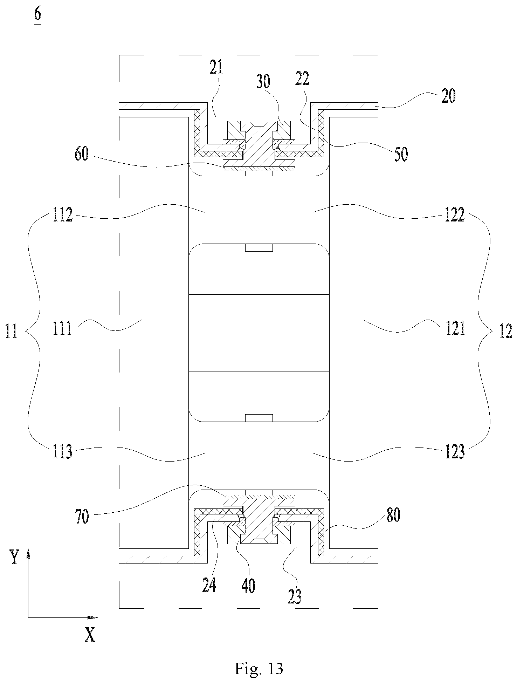

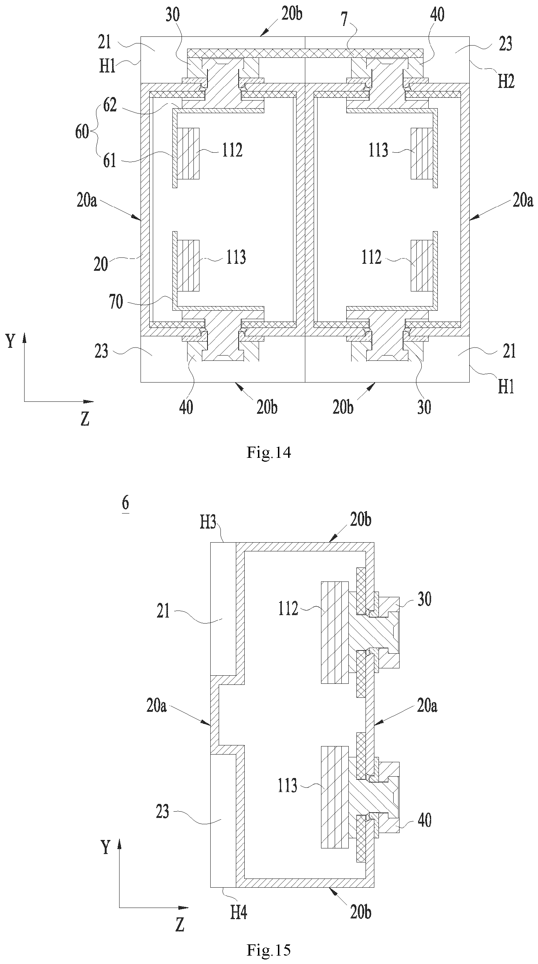

Fig. 13 is an enlarged schematic view of the battery cell at block A shown in Fig. 3; and Fig. 14 is a schematic cross-sectional view of a plurality of battery cells as shown in Fig. 3 after being assembled.

As shown in Figs. 13 and 14, in some embodiments, in at least one direction perpendicular to the first direction X, at least a part of a projection of the first electrode terminal 30 is located between a projection of the first body 111 and a projection of the second body 121.

In the description of the embodiments, the projection of the first electrode terminal 30, the projection of the first body 111 and the projection of the second body 121 are projections on a same plane, which is a plane perpendicular to the above-mentioned at least one direction.

In the embodiments, the projection of the first electrode terminal 30 along the first direction X and the projection of the first body 111 along the first direction X may or may not be overlapped with each other; and the projection of the first electrode terminal 30 along the first direction X and the projection of the second body 121 along the first direction X may or may not be overlapped with each other.

Exemplarily, in a case where the first electrode terminal 30 and the first tab 112 are arranged along the second direction Y, then in the second direction Y, at least a part of the projection of the first electrode terminal 30 is located between the projection of the first body 111 and the projection of the second body 121; and in a case where the first electrode terminal 30 and the first tab 112 are arranged along the third direction Z, then in the third direction Z, at least a part of the projection of the first electrode terminal 30 is located between the projection of the first body 111 and the projection of the second body 121.

In the embodiments, a distance between the first electrode terminal 30 and the first tab 112 and a distance between the first electrode terminal 30 and the second tab 122 can be reduced, which helps to shorten the conduction path and simplifies an assembly process for connecting the first electrode terminal 30 to the of the first tab 112 and the second tab 122.

In some embodiments, an outer surface of the housing 20 includes a first recess part 21, and at least a part of the first electrode terminal 30 is accommodated in the first recess part 21.

The first electrode terminal 30 may be entirely accommodated in the first recess part 21, or may be only partially accommodated in the first recess part 21.

In the embodiments, by providing the first recess part 21 on the housing 20 to provide an accommodation space for the first electrode terminal 30, a size of a part of the first electrode terminal 30 which protrudes outside of the outer surface of the housing 20 can be reduced, and thereby a volume of the battery cell 6 can be reduced and energy density of the battery cell 6 can be improved.

In some embodiments, the part of the first electrode terminal 30 outside of the housing 20 is completely accommodated in the first recess part 21.

In the embodiments, the part of the first electrode terminal 30 outside of the housing 20 is completely accommodated in the first recess part 21, so the first electrode terminal 30 does not protrude from the outer surface of the housing 20 and thus does not additionally increase the size of the battery cell 6, and thus the energy density of the battery cell 6 can be improved.

In some embodiments, the first recess part 21 is disposed at side of the first tab 112 along the second direction Y, and at least one end of the first recess part 21 in the third direction Z extends to an edge of the housing 20. Any two of the first direction X, the second direction Y and the third direction Z are perpendicular to each other.

In the embodiments, at least one end of the first recess part 21 in the third direction Z extends to an edge of the housing 20, so in a case where a plurality of battery cells 6 are assembled, a busbar member 7 can protrude from the edge of the housing 20 into the first recess part 21, which helps to simplify a process for assembling of the busbar member 7 and the first electrode terminal 30.

In some embodiments, the first direction X is parallel to a direction along the length of the battery cell 6, the second direction Y is parallel to a direction along the width of the battery cell 6, and the third direction Z is parallel to a direction along the thickness of the battery cell 6. In some other embodiments, the first direction X is parallel to the direction along the length of the battery cell 6, the second direction Y is parallel to the direction along the thickness of the battery cell 6, and the third direction Z is parallel to the direction along the width of the battery cell 6.

In some embodiments, the housing 20 may include a first convex part 22 on its inner side at a position corresponding to the first recess part 21, and at least a part of the first convex part 22 is located between the first body 111 and the second body 121.

The first electrode terminal 30 is installed on the first convex part 22.

A projection of the first convex part 22 in the first direction X is at least partially overlapped with the projection of the first body 111 along the first direction X, and the projection of the first convex part 22 in the first direction X is at least partially overlapped with the projection of the second body 121 along the first direction X.

In the embodiments, the first convex part 22 plays a reinforcing role at the position of the housing 20 where the first recess part 21 is provided, so as to ensure a connection strength of the first electrode terminal 30 with the housing 20. The setting of the first convex part 22 can also make the first recess part 21 concave as much as possible along a direction towards the first tab 112 and the second tab 122, so as to increase a concave depth of the first recess part 21 and thus reduce an additional space occupied by the first electrode terminal 30. The first convex part 22 can also separate the first body 111 from the second body 121 to avoid contact between the first body 111 and the second body 121 to reduce a risk of short circuit.

In some embodiments, the battery cell 6 may further includes a first insulation member 50, which is disposed on an inner surface of the first convex part 22 to insulate and separate the electrode unit 10 from the first convex part 22.

The housing 20 may be made of a conductive metal. If the first convex part 22 is in contact with the first body 111, the first convex part 22 may conduct the positive and negative electrode pieces in the first body 111, thereby causing a risk of short circuit.

In the embodiments, by providing the first insulation member 50 to insulate and isolate the electrode unit 10 from the first convex part 22, it prevents the first convex part 22 from contacting the first electrode piece 13 and the second electrode piece 14 of the electrode unit 10, a risk of short circuit can thus be reduced.

In some embodiments, the first insulation member 50 may be bonded to the inner surface of the first convex part 22.

In some embodiments, the first insulation member 50 may include a material of plastic.

In some embodiments, the first insulation member 50 may be clamped between the first body 111 and the second body 121.

In the embodiments, the first insulation member 50 can play a position-limiting role. When the battery vibrates, the first insulation member 50 can reduce a vibration amplitude of the first body 111 and the second body 121, to improve security of the battery cell 6.

In some embodiments, the battery cell 6 may further includes a first adapter 60 for connecting the first tab 112 and the second tab 122 to the first electrode terminal 30.

The first adapter 60 is made of a conductive material, for example, the first adapter 60 may be made of a conductive metal.

A part of the first adapter 60 may be connected to the first tab 112 and the second tab 122 by welding, bonding or other methods, and another part of the first adapter 60 may be connected to the first electrode terminal 30 by welding, bonding or other methods, so as to electrically connect the first tab 112 and the second tab 122 to the first electrode terminal 30.

In the embodiments, by providing the first adapter 60 to connect the first tab 112 and the second tab 122 to the first electrode terminal 30, an installation position of the first electrode terminal 30 become more flexible since the first adapter 60 can be shaped based on relative locations of the first tab 112, the second tab 122 and the first electrode terminal 30.

In some embodiments, the first electrode terminal 30 may be disposed at a side of the first tab 112 in the second direction Y The first adapter 60 includes a tab connection part 61 and a terminal connection part 62. The tab connection part 61 and the first tab 112 are arranged along a third direction Z and connected with each other. The terminal connection part 62 is located between the first electrode terminal 30 and the second electrode terminal 30 and connected to the first electrode terminal 30. Any two of the first direction, the second direction and the third direction are perpendicular to each other.

The terminal connection part 62 is folded relative to the tab connection part 61.

Exemplarily, an included angle between the tab connection part 61 and the terminal connection part 62 may be 85°-95°.

The tab connection part 61 and the second tab 122 are arranged and connected along the third direction Z. Exemplarily, the first tab 112 and the second tab 122 are located at a same side of the tab connection part 61 along the third direction Z.

In the embodiments, by providing the first adapter 60 to connect the first electrode terminal 30 and the first tab 112, the first electrode terminal 30 and the first tab 112 can be relatively located in a more flexible manner, and thus the first electrode terminal 30 and the first tab 112 does not need to be arranged facing each other along the second direction Y, which can simplify a structure of the battery cell 6 and simplify an assembly process for the battery cell 6.

In some embodiments, a plurality of first tabs 112 are stacked on the tab connection part 61 along the third direction Z, and fixed to the tab connection part 61 by welding; and a plurality of second tabs 122 are stacked on the tab connection part 61 along the third direction Z and fixed to the tab connection part 61 by welding.

In some embodiments, the first electrode assembly 11 may further include a third tab 113 connected to the first body 111, and the second electrode assembly 12 may further include a fourth tab 123 connected to the second body 121, and a polarity of the third tab 113 is the same as a polarity of the fourth tab 114 and the third tab 113 and the fourth tab 123 are located between the first body 111 and the second body 121. The polarity of the third tab 113 is opposite to that of the first tab 112. The battery cell 6 may further includes a second electrode terminal 40 disposed on the housing 20, and the second electrode terminal 40 is connected to the third tab 113 and the fourth tab 123.

The third tab 113 and the fourth tab 123 are electrically connected to each other to connect the first electrode assembly 11 and the second electrode assembly 12 in parallel. The third tab 113 and the fourth tab 123 may be directly connected, or indirectly connected through other conductive structures.

The third tab 113 and the fourth tab 123 may be an integrally formed structure. For example, the third tab 113 and the fourth tab 123 may be included in the second uncoated area of the second electrode piece. Certainly, the third tab 113 and the fourth tab 123 may be separate structures. For example, the third tab 113 and the fourth tab 123 may be connected by welding, bonding or other means.

One of the first electrode terminal 30 and the second electrode terminal 40 functions as a positive output terminal of the battery cell 6, and the other functions as a negative output terminal of the battery cell 6.

In the embodiments, the first electrode terminal 30 and the second electrode terminal 40 connect the first electrode assembly 11 and the second electrode assembly 12 in parallel, to reduce an amount of current flowing between the first electrode assembly 11 and the second electrode assembly 12. In this way, even if the entirety of the battery cell 6 is relatively longer, an internal resistance of the first electrode assembly 11 and an internal resistance of the second electrode assembly 12 can meet requirements, so as to reduce heat generation, and improve charging and discharging performances of the battery cell 6.

In some embodiments, the battery cell 6 may further includes a second adapter 70 for connecting the third tab 113 and the fourth tab 123 to the second electrode terminal 40.

In some embodiments, an outer surface of the housing 20 may include two first surfaces 20a which are opposite in a third direction Z and two second surfaces 20b which are opposite in a second direction Y, wherein any two of the first direction, the second direction and the third direction are perpendicular to each other. The first tab 112 and the second tab 122 are arranged along the second direction Y and spaced apart from each other, and the first electrode terminals 30 and the second electrode terminals 40 are arranged along the second direction Y and spaced apart from each other.

In the embodiments, a projection of the first electrode terminal 30 in the second direction Y may or may not be overlapped with a projection of the second electrode terminal 40 in the second direction Y

Exemplarily, the first surface 20a may be a plane perpendicular to the third direction Z, and the second surface 20b may be a plane perpendicular to the second direction Y

In some embodiments, the projection of the first electrode terminal 30 in the second direction Y may be at least partially overlapped with the projection of the second electrode terminal 40 in the second direction Y

In the embodiments, misalignment of the first electrode terminal 30 and the second electrode terminal 40 in the first direction X can be reduced, and a space occupied by the first electrode terminal 30 and the second electrode terminal 40 can be reduced; in a case where a plurality of battery cells 6 are connected in series, the embodiments facilitate connection of the first electrode terminal 30 of a battery cell with the second electrode terminals 40 of an adjacent battery cell 6. By overlapping the first electrode terminal 30 and the second electrode terminal 40 in the second direction Y, the first electrode terminal 30 and the second electrode terminal 40 can share a same space in the first direction X, effectively improving space utilization, thereby improve energy density of the battery cell.

In some embodiments, the projection of the first electrode terminal 30 in the second direction Y is completely overlapped with the projection of the second electrode terminal 40 in the second direction Y

In some embodiments, the first surface 20a is a surface having a largest area among all surfaces of the housing 20.

The outer surface of the housing 20 may further include two end faces which are oppositely arranged along the first direction X, and an area of the first surface 20a is larger than an area of the second surface 20b and an area of the end face.

In some embodiments, the first electrode terminal 30 and the second electrode terminal 40 may be disposed on the two second surfaces 20b, respectively.

In the second direction Y, the first electrode terminal 30 is located at a side of the first tab 112 away from the second tab 122, and the second electrode terminal 40 is located at a side of the second tab 122 away from the first tab 112.

In the embodiments, in a case where a plurality of battery cells 6 are arranged along the third direction Z, a busbar member 7 can be disposed at a side of the battery cells 6 in the second direction Y to connect the first electrode terminal 30 of a battery cell and the second electrode terminal 40 of an adjacent battery cell 6, without extending into the adjacent battery cells 6, which can simplify a structure of the busbar member 7 and reduce difficulty in assembly.

In some embodiments, one of the second surfaces 20b includes a first recess part 21, and the other of the second surfaces 20b includes a second recess part 23. At least a part of the first electrode terminal 30 is accommodated in the first recess part 21, and at least a part of the second electrode terminal 40 is accommodated in the second recess 23.

The first electrode terminal 30 may be completely accommodated in the first recess part 21, or may be only partially accommodated in the first recess part 21. The second electrode terminal 40 may be completely accommodated in the second recess part 23, or only partially accommodated in the second recess part 23.

In the embodiments, by providing the first recess part 21 and the second recess part 23 on the housing 20 to provide accommodation spaces for the first electrode terminal 30 and the second electrode terminal 40, a maximum size of the battery cell 6 in the second direction Y can be reduced, and energy density of the battery cell 6 can be improved.

In some embodiments, the first recess part 21 and the second recess part 23 are arranged symmetrically with respect to a first plane, which is perpendicular to the second direction Y

In a case where two battery cells 6 are arranged along the third direction Z, the first recess part 21 of one of the battery cells 6 is disposed opposite to the second recess part 23 of the other of the battery cells 6 along the third direction Z, which enables that a busbar member 7 can connect both the first electrode terminal 30 of one of the battery cells 6 and the second electrode terminal 40 of the other of the battery cells 6.

In some embodiments, a part of the first electrode terminal 30 outside of the housing 20 is completely accommodated in the first recess part 21, and a part of the second electrode terminal 40 outside of the housing 20 is completely accommodated in the second recess part 23.

In the embodiments, neither the first electrode terminal 30 nor the second electrode terminal 40 protrudes from the respective second surfaces 20b, so the size of the battery cell 6 in the second direction Y will not be additionally increased, thereby improving energy density of the battery cell 6.

In some embodiments, in the third direction Z, both ends of the first recess part 21 extend to the two first surfaces 20a respectively, and both ends of the second recess part 23 extend to the two first surfaces 20a respectively.

The two ends of the first recess part 21 form first openings H1 on the two first surfaces 20a respectively, through which an external busbar member 7 can extend into the first recess part 21 to connect to the first electrode terminal 30. The two ends of the second recess part 23 form second openings H2 on the two first surfaces 20a respectively, through which an external busbar member 7 can protrude into the second recess part 23 to connect the second electrode terminal 40. The embodiments enable that busbar members 7 can protrude into the first recess part 21 and the second recess part 23 along the third direction Z, thereby simplifying a structure of the busbar member 7 and reducing a difficulty of assembling the busbar member 7.

In some embodiments, the housing 20 may include a second convex part 24 on its inner side at a position corresponding to the second recess part 23, and at least a part of the second convex part 24 is located between the first body 111 and the second body 121. The second electrode terminal 40 is installed on the second convex part 24.

In the embodiments, the second convex part 24 can play a reinforcing role at the position of the housing 20 where the second recess part 23 is provided, so as to ensure a connection strength of the second electrode terminal 40 with the housing 20. The setting of the second convex part 24 can also make the second recess part 23 concave as much as possible along a direction toward the third tab 113 and the fourth tab 123, so as to increase a concave depth of the second recess part 23 and reduce an additional space occupied by the second electrode terminal 40. The second convex part 24 can also separate the first body 111 from the second body 121 to avoid contact between the first body 111 and the second body 121 to reduce a risk of short circuit.

In some embodiments, the battery cell 6 may further includes a second insulation member 80, which is disposed on an inner surface of the second convex part 24 to insulate and isolate the electrode unit 10 from the second convex part 24.

In the embodiments, by providing the second insulation member 80 to insulate and isolate the electrode unit 10 from the second convex part 24, it prevents the second convex part 24 from contacting the first electrode piece and the second electrode piece of the electrode unit 10, a risk of short circuit can thus be reduced.

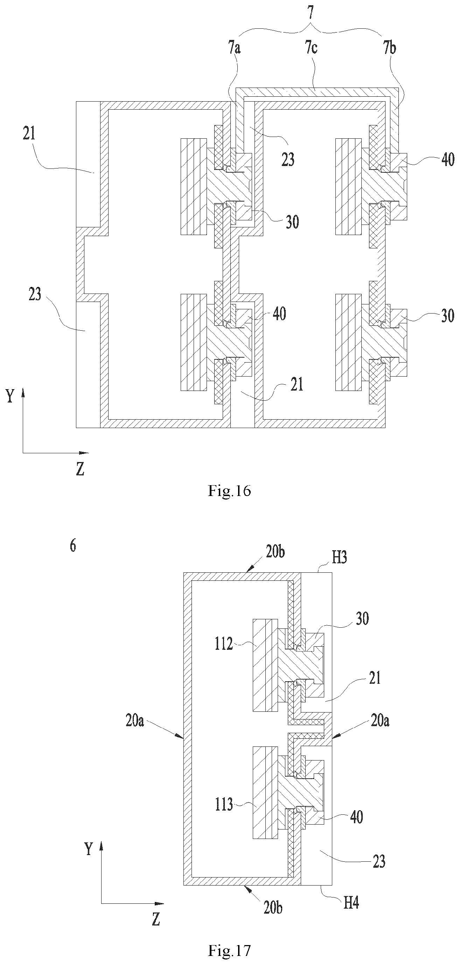

Fig. 15 is a schematic cross-sectional view of a battery cell according to some other embodiments of the present application; and Fig. 16 is a schematic structural view of a plurality of battery cells shown in Fig. 15 after being assembled.

As shown in Fig. 15 and Fig. 16, in some embodiments, the first electrode terminal 30 and the second electrode terminal 40 are disposed on a same one of the first surfaces 20a.

In some embodiments, the first electrode terminal 30 may be directly connected to the first tab 112, or may be connected to the first tab 112 through other conductive components (such as a first adapter).

In some embodiments, there may be a plurality of first tabs 112, and the plurality of first tabs 112 are stacked along the third direction Z. The first electrode terminal 30 is disposed at a side of the plurality of first tabs 112 in the third direction Z. In the embodiments, the plurality of first tabs 112 can be directly connected to the first electrode terminal 30.

In some embodiments, the first electrode terminal 30 and the second electrode terminal 40 are disposed on and protrude from one of the first surfaces 20a; the other of the first surfaces 20a includes a first recess part 21 and a second recess part 23 which are arranged along the second direction Y, wherein the first recess part 21 is disposed opposite to the first electrode terminal 30 in the third direction Z, and the second recess part 23 is disposed opposite to the second electrode terminal 40 in the third direction Z. In a case where a plurality of battery cells 6 are arranged along the third direction Z, the first recess part 21 is configured to accommodate a first electrode terminal 30 of an adjacent battery cell 6, and the second recess part 23 is configured to accommodate a second electrode terminal 40 of the adj acent battery cell 6; or, in a case where a plurality of battery cells 6 are arranged along the third direction Z, the first recess part 21 is configured to accommodate a second electrode terminal 40 of an adjacent battery cell 6, and the second recess part 23 is configured to accommodate a first electrode terminal 30 of the adjacent battery cell 6.

In the embodiments, when a plurality of battery cells 6 are arranged along the third direction Z, the first recess part 21 and the second recess part 23 can provides accommodating spaces for the first electrode terminal 30 and the second electrode terminal 40 of an adj acent battery cell 6, which can reduce an overall size of the plurality of battery cells 6 in the third direction Z, thereby increasing space utilization and improving energy density.

In some embodiments, one end of the first recess part 21 away from the second recess part 23 extends to one of the second surfaces 20b, and one end of the second recess part 23 away from the first recess part 21 extends to the other of the second surfaces 20b.

The end of the first recess part 21 forms a third opening H3 on the one of the second surfaces 20b, through which an external busbar member 7 can protrude into the first recess part 21 to connect to the first electrode terminal 30. The end of the second recess part 23 forms a fourth opening H4 on the other of the second surface 20b to be connected to the second electrode terminal 40. The embodiment enables that busbar members 7 can protrude into the first recess part 21 and the second recess part 23 along the second direction Y, thereby simplifying a structure of the busbar member 7 and reducing a difficulty of assembling the busbar member 7.

Exemplarily, in a case where two battery cells 6 are arranged along the third direction Z, and the first electrode terminal 30 of one of the battery cells 6 opposites to the second recess part 23 of the other of the battery cells 6 along the third direction Z. A busbar member 7 is folded into a U-shaped structure, which includes a first busbar part 7a, a second busbar part 7b and a third busbar part 7c, wherein the first busbar part 7a is configured to connect the first electrode terminal 30 and protrudes into the second recess part 23 of the other battery cell 6, the second busbar part 7b is configured to connect the second electrode terminal 40 of the other battery cell 6, and the third busbar part 7c connects the first busbar part 7a and the second busbar part 7b.

In some embodiments, the first recess part 21 and the second recess part 23 are arranged symmetrically with respect to a first plane, which is perpendicular to the second direction Y In this way, when two battery cells 6 are arranged along the third direction Z, the first recess part 21 of one of the battery cells 6 and the second recess part 23 of the other of the battery cells 6 are disposed oppositely along the third direction Z.

In some embodiments, the first recess part 21 and the second recess part 23 may be connected together, or may be separated by a part of the housing 20.

Fig. 17 is a schematic cross-sectional view of a battery cell according to some other embodiments of the present application.

As shown in Fig. 17, in some embodiments, one of the first surfaces 20a includes a first recess part 21 and a second recess part 23 which are arranged along the second direction Y At least a part of the first electrode terminal 30 is accommodated in the first recess part 21, and at least a part of the second electrode terminal 40 is accommodated in the second recess part 23.

In the embodiments, by providing the first recess part 21 and the second recess part 23 on the housing 20 to provide accommodating spaces for the first electrode terminal 30 and the second electrode terminal 40, a maximum size of the battery cell 6 in the third direction Z can be reduced, and energy density of the battery cell 6 can be improved.

In some embodiments, a part of the first electrode terminal 30 outside of the housing 20 is completely accommodated in the first recess part 21, and a part of the second electrode terminal 40 outside of the housing 20 is completely accommodated in the second recess part 23.

In the embodiments, neither the first electrode terminal 30 nor the second electrode terminal 40 protrudes from the first surface 20a, so the size of the battery cell 6 in the third direction Z will not be additionally increased, thereby improving energy density of the battery cell 6.

In some embodiments, an end of the first recess part 21 away from the second recess part 23 extends to one of the second surfaces 20b, and an end of the second recess part 23 away from the first recess part 21 extends to the other of the second surfaces 20b.

One end of the first recess part 21 forms a third opening H3 on one of the second surfaces 20b, through which an external busbar member can protrude into the first recess part 21 to connect to the first electrode terminal 30. One end of the second recess part 23 forms a fourth opening H4 on the other of the second surfaces 20b, through which an external busbar member can protrude into the second recess part 23 to connect to the second electrode terminal 40. The embodiments enable that busbar members can protrude into the first recess part 21 and the second recess part 23 along the second direction Y, thereby simplifying a structure of the busbar member and reducing a difficulty of assembling the busbar member.

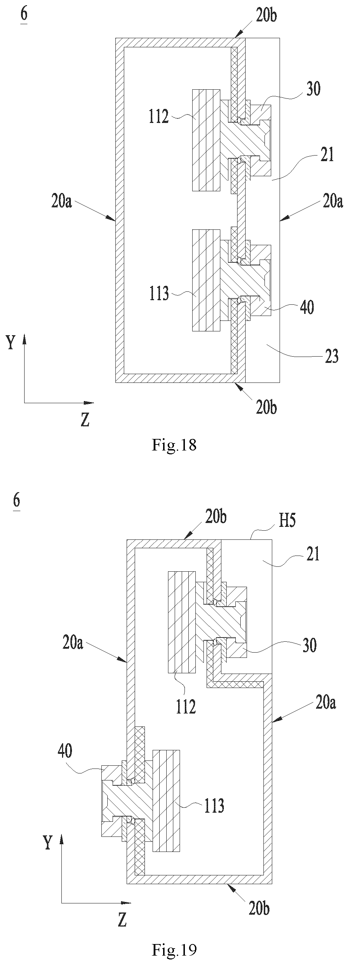

Fig. 18 is a schematic cross-sectional view of a battery cell according to some other embodiments of the present application.

In some embodiments, the first recess part 21 is connected with the second recess part 23. In the embodiments, the first recess part 21 and the second recess part 23 can be formed in a single process, so as to simplify a molding process for the housing 20.

Exemplarily, the first recess part 21 and the second recess part 23 may be two regions of a strip-shaped recess part extending along the second direction Y, and two ends of the strip-shaped recess part respectively extend to the two second surfaces 20b. In a case where a plurality of battery cells 6 are arranged along the third direction Z, the strip-shaped recess part can connect spaces at respective sides of the battery cell 6 along the second direction Y to form heat dissipation channels so as to improve heat dissipation efficiency.

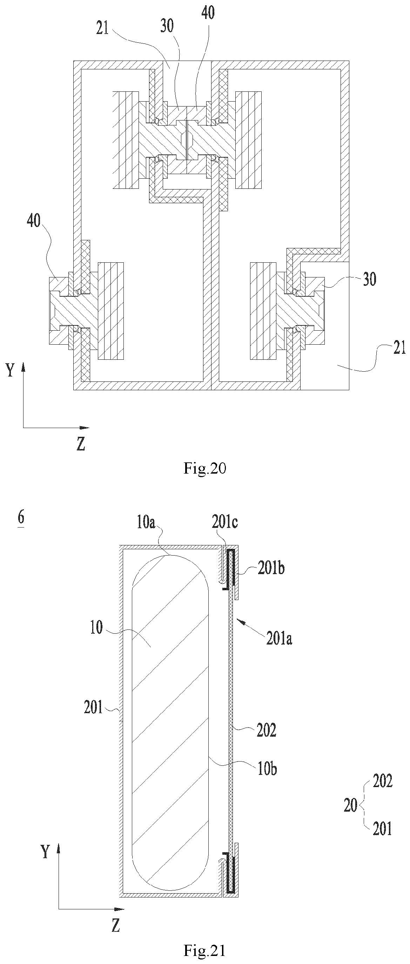

Fig. 19 is a schematic cross-sectional view of a battery cell according to some other embodiment of the present application; and Fig. 20 is a schematic structural view of a plurality of battery cells shown in Fig. 19 after being assembled.

As shown in Fig. 19 and Fig. 20, in some embodiments, the first electrode terminal 30 and the second electrode terminal 40 are disposed on the two first surfaces 20a respectively.

In the embodiments, a distance between the first electrode terminal 30 and the second electrode terminal 40 can be increased to reduce a risk of conduction between the two electrode terminals.

In some embodiments, one of the first surfaces 20a includes a first recess part 21, at least a part of the first electrode terminal 30 is accommodated in the first recess part 21; the second electrode terminal 40 is disposed on and protrudes from the other of the first surfaces 20a; and in a case where a plurality of battery cells 6 are arranged along the third direction Z, the first recess part 21 is configured to accommodate a second electrode terminal 40 of an adjacent battery cell 6.

In the embodiments, when a plurality of battery cells 6 are arranged along the third direction Z, the first recess part 21 can provide an accommodation space for the second electrode terminal 40 of an adjacent battery cell 6, which can reduce an overall size of the plurality of battery cells 6 in the third direction Z, so as to increase space utilization and improve energy density.

In some embodiments, in a case where a plurality of battery cells 6 are arranged along the third direction Z, the second electrode terminal 40 of the battery cell 6 protrudes into a first recess part 21 of an adjacent battery cell 6 and presses against a first electrode terminal 30 of the adjacent battery cell 6 so as to realize a series connection of the battery cells 6.

In the embodiments, it is unnecessary to provide a busbar member, thereby simplifying a structure of a battery and improving energy density of the battery.

In some embodiments, in the second direction Y, at least one end of the first recess part 21 extends to one of the second surfaces 20b.

In the embodiments, the first recess part 21 forms a fifth opening H5 on the second surface 20b, through which an external device can connect the first electrode terminal 30 and the second electrode terminal 40 protruding into the first recess part 21.

For example, a welding device is able to weld the first electrode terminal 30 and the second electrode terminal 40 protruding into the first recess part 21 through the fifth opening H5.

Fig. 21 is a schematic cross-sectional view of a battery cell according to some other embodiments of the present application.

As shown in Fig. 21, in some embodiments, the housing 20 includes a housing body 201 and an end cap 202, the housing body 201 includes an opening 201a, and the end cap 202 covers the opening 201a. The first electrode terminal 30 is mounted on the housing body 201 or the end cap 202.

The housing body 201 is a hollow structure, and a space for accommodating the electrode unit 10 is formed inside it. The housing body 201 may have a shape which is determined according to a specific shape of the electrode unit 10. For example, if the electrode unit 10 includes a cylindrical structure, a cylindrical housing body can be selected; or if the electrode unit 10 includes a cuboid structure, a cuboid housing body can be selected.

The housing body 201 may be a structure with one side being open, and one end cap 202 is provided to cover the opening 201a of the housing body 201. Alternatively, the housing body 201 may be a structure with two sides being opening, and two end caps 202 are provided to cover the two openings 201a of the housing body 201 respectively.

The end cap 202 may be connected to the housing body 201 by welding, bonding, clamping or other methods.

The second electrode terminal 40 is mounted on the housing body 201 or the end cap 202. Exemplarily, both the first electrode terminal 30 and the second electrode terminal 40 are mounted on the housing body 201, or both the first electrode terminal 30 and the second electrode terminal 40 are mounted on the end cap 202.

In some embodiments, the electrode unit 10 includes two narrower faces 10a which are oppositely arranged along a second direction Y and two wider faces 10b which are oppositely arranged along a third direction Z, the narrower faces 10a respectively connect the two wider faces 10b, and any two of the first direction, the second direction and the third direction are perpendicular to each other. The opening 201a is provided on one end of the housing body 201 along the third direction Z, and the wider surfaces 10b are disposed opposite to the end cap 202 along the third direction Z.

In the embodiments, the housing body 201 includes the opening 201a at one end in the third direction Z, which can increase an area of the opening 201a, so that the electrode unit 10 can be placed in the housing body 201 more easily.

In some embodiments, the first electrode terminal 30 and the second electrode terminal 40 are mounted on two opposite ends of the housing body 201 along the second direction Y respectively. In some other embodiments, the first electrode terminal 30 and the second electrode terminal 40 are mounted on the end cap 202.

In some embodiments, the housing body 201 includes a flange structure 201b at an end close to the opening 201a, and the flange structure 201b is located at a side of the end cap 202 away from the electrode unit 10.

In the embodiments, the flange structure 201b can limit movement of the end cap 202 toward a direction away from the electrode unit 10, thereby preventing the end cap 202 from detaching from the housing body 201.

In some embodiments, the housing body 201 may further include a support structure 201c, which is located at a side of the end cap 202 facing the electrode unit 10. The support structure 201c and the flange structure 201b clamp the end cap 202 from both sides, so as to realize a fixed connection of the end cap 202 with the housing body 201.

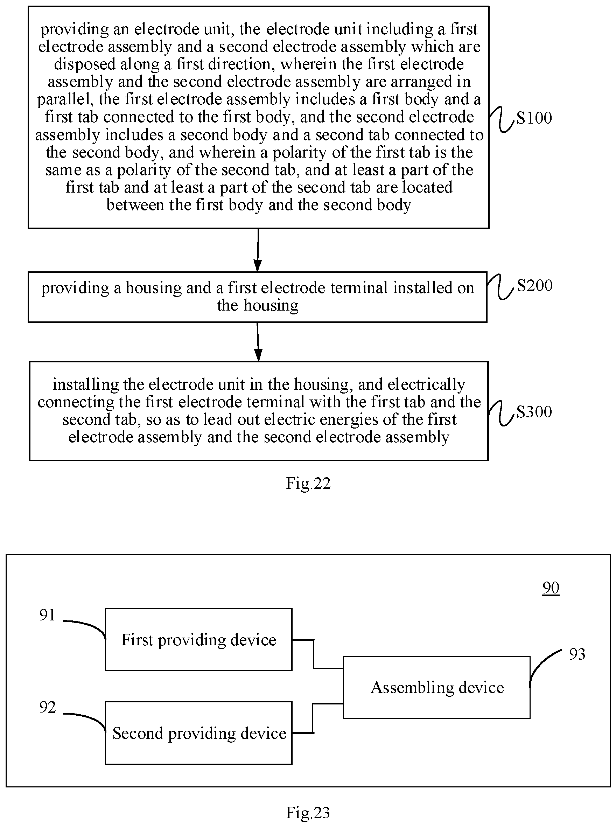

Fig. 22 is a schematic flowchart of a method for manufacturing a battery cell according to some embodiments of the present application.

As shown in Fig. 22, the embodiment of the present application provides a method for manufacturing a battery cell, includes:

S100, providing an electrode unit, the electrode unit including a first electrode assembly and a second electrode assembly which are disposed along a first direction, wherein the first electrode assembly and the second electrode assembly are arranged in parallel, the first electrode assembly includes a first body and a first tab connected to the first body, and the second electrode assembly includes a second body and a second tab connected to the second body, and wherein a polarity of the first tab is the same as a polarity of the second tab, and at least a part of the first tab and at least a part of the second tab are located between the first body and the second body;
S200, providing a housing and a first electrode terminal installed on the housing; and
S300, installing the electrode unit in the housing, and electrically connecting the first electrode terminal with the first tab and the second tab, so as to export electric energies of the first electrode assembly and the second electrode assembly.

It should be noted that, for a structure of a battery cell manufactured by the above manufacturing system, reference may be made to the battery cells provided in the above embodiments.

When manufacturing a battery cell based on the above-mentioned method for manufacturing a battery cell, it is not necessary to follow the above steps in sequence, that is, the steps may be performed in the order mentioned in the embodiments, or may be performed in an order different from that mentioned in the embodiments, or several steps may be performed simultaneously. For example, the steps S100 and S200 may not be performed sequentially, and may be performed simultaneously.

Fig. 23 is a schematic block diagram of a system for manufacturing a battery cell according to some embodiments of the present application.

As shown in Fig. 23, the embodiments of the present application provide a system 90 for manufacturing a battery cell, includes:

a first providing device 91 configured to provide an electrode unit including a first electrode assembly and a second electrode assembly which are disposed along a first direction, wherein the first electrode assembly and the second electrode assembly are arranged in parallel, the first electrode assembly includes a first body and a first tab connected to the first body, and the second electrode assembly includes a second body and a second tab connected to the second body, and wherein a polarity of the first tab is the same as a polarity of the second tab, and at least a part of the first tab and at least a part of the second tab are located between the first body and the second body;

a second providing device 92 configured to provide a housing and a first electrode terminal installed on the housing; and

an assembling device 93 configured to install the electrode unit in the housing, and electrically connect the first electrode terminal with the first tab and the second tab so as to export electrical energies of the first electrode assembly and the second electrode assembly.

For a structure of a battery cell manufactured by the above manufacturing system, reference may be made to the battery cells provided in the above embodiments.

It should be noted that, in absent of conflicts, the embodiments in the present application and the features in the embodiments may be combined with each other.

Finally, it should be noted that, the above embodiments are provided only to illustrate the technical solutions of the present application, rather than limiting the present invention; although the present application has been described in detail with reference to the foregoing embodiments, those skilled in the art should understand that modifications can be made to the technical solutions described in the foregoing embodiments or equivalent replacements can be made to some of the technical features, but these modifications or replacements do not make essence of corresponding technical solutions deviate from the spirit and scope of the technical solutions of the embodiments of the present application.

## Claims

1. A battery cell, comprising:

   a housing;
   an electrode unit accommodated in the housing and comprising a first electrode assembly and a second electrode assembly which are disposed along a first direction, wherein the first electrode assembly and the second electrode assembly are arranged in parallel, the first electrode assembly comprises a first body and a first tab connected to the first body, and the second electrode assembly comprises a second body and a second tab connected to the second body, and wherein a polarity of the first tab is the same as a polarity of the second tab, and at least a part of the first tab and at least a part of the second tab are located between the first body and the second body; and
   a first electrode terminal disposed on the housing and electrically connected to the first tab and the second tab to export electric energies of the first electrode assembly and the second electrode assembly.

2. The battery cell according to claim 1, wherein:

   the electrode unit comprises a first electrode piece, a second electrode piece and an isolator, wherein a polarity of the first electrode piece is opposite to a polarity of the second electrode piece, and the isolator is configured to insulate and isolate the first electrode piece from the second electrode piece;
   the first electrode piece comprises a first coated area, a first uncoated area and a second coated area which are sequentially arranged along the first direction, wherein the first coated area and the second coated area are respectively coated with a first active material layer, while the first uncoated area is not coated with the first active material layer; and
   the first body comprises the first coated area, the second body comprises the second coated area, and the first uncoated area comprises the first tab and the second tab and is formed integrally.

3. The battery cell according to claim 2, wherein the first electrode piece and the second electrode piece are wound around a winding axis to form a wound structure; and
   the first electrode piece comprises a plurality of first uncoated areas which are stacked.

4. The battery cell according to claim 2, wherein the first electrode piece and the second electrode piece are stacked alternately.

5. The battery cell according to claim 2, wherein:

   the first electrode piece is continuous and folded and comprises a plurality of lamination segments and a plurality of bent segments, wherein the plurality of lamination segments and the second electrode piece are alternately stacked, and each of the bent segments is configured to connect two adjacent lamination segments; and

each of the lamination segments is provided with the first uncoated area.

6. The battery cell according to any one of claims 2 to 5, wherein:

the isolator comprises a first isolation part and a second isolation part, wherein the first isolation part is configured to insulate and isolate the first coated area from the second electrode piece, and the second isolation part is configured to insulate and isolate the second coated area from the second electrode piece;
a gap is formed between the first isolation part and the second isolation part for exposing the first uncoated area; and
the first body comprises the first isolation portion, and the second body comprises the second isolation portion.

7. The battery cell according to claim 6, wherein the isolator is integrally formed and further comprises a connection part for connecting the first isolation part and the second isolation part.

8. The battery cell according to any one of claims 2 to 7, wherein:

the second electrode piece comprises a third coated area, a second uncoated area and a fourth coated area which are sequentially arranged along the first direction, wherein the third coated area and the fourth coated area are respectively coated with a second active material layer, while the second uncoated area is not coated with the second active material layer; and
the first body comprises the third coated area, the second body comprises the fourth coated area, and the second uncoated area is provided for exporting current in the third coated area and current in the fourth coated area.

9. The battery cell according to any one of claims 1 to 8, comprising a plurality of electrode units, wherein the plurality of electrode units are stacked, and a direction along which the plurality of electrode units are stacked is perpendicular to the first direction.

10. The battery cell according to any one of claims 1 to 9, wherein in at least one direction perpendicular to the first direction, at least a part of a projection of the first electrode terminal is located between a projection of the first body and a projection of the second body.

11. The battery cell according to any one of claims 1 to 10, wherein an outer surface of the housing comprises a first recess part, and at least a part of the first electrode terminal is accommodated in the first recess part.

12. The battery cell according to claim 11, wherein a part of the first electrode terminal outside of the housing is completely accommodated in the first recess part.

13. The battery cell according to claim 11 or 12, wherein the first recess part is disposed at a side of the first tab in a second direction, and at least one end of the first recess part in a third direction extends to an edge of the housing; and
wherein any two of the first direction, the second direction and the third direction are perpendicular to each other.

14. The battery cell according to any one of claims 11 to 13, wherein:

the housing comprises a first convex part at a position on an inner side corresponding to the first recess part, and at least a part of the first convex portion is located between the first body and the second body; and
the first electrode terminal is installed on the first convex part.

15. The battery cell according to claim 14, further comprising a first insulation member which is disposed on an inner surface of the first convex part to insulate and isolate the electrode unit from the first convex part.

16. The battery cell according to claim 15, wherein the first insulation member is clamed between the first body and the second body.

17. The battery cell according to any one of claims 1 to 16, further comprising a first adapter for connecting the first tab and the second tab to the first electrode terminal.

18. The battery cell according to claim 17, wherein:

the first electrode terminal is disposed at a side of the first tab in a second direction;
the first adapter comprises a tab connection part and a terminal connection part, the tab connection part and the first tab are arranged along a third direction and connected with each other, and the terminal connection part is located between the first electrode terminal and the first tab and connected to the first electrode terminal; and
any two of the first direction, the second direction and the third direction are perpendicular to each other.

**19.** The battery cell according to any one of claims 1 to 10, wherein:

the first electrode assembly further comprises a third tab connected to the first body, the second electrode assembly further comprises a fourth tab connected to the second body, and a polarity of the third tab is the same as a polarity of the fourth tab, and the third tab and the fourth tab are located between the first body and the second body;
the polarity of the third tab is opposite to the polarity of the first tab; and
the battery cell further comprises a second electrode terminal disposed on the housing, the second electrode terminal is connected to the third tab and the fourth tab.

**20.** The battery cell according to claim 19, wherein:

an outer surface of the housing comprises two first surfaces which are opposite in a third direction and two second surfaces which are opposite in a second direction, wherein any two of the first direction, the second direction and the third direction are perpendicular to each other; and
the first tab and the second tab are arranged along the second direction and spaced apart from each other, and the first electrode terminal and the second electrode terminal are arranged along the second direction and spaced apart from each other.

**21.** The battery cell according to claim 20, wherein a projection of the first electrode terminal in the second direction is at least partially overlapped with a projection of the second electrode terminal in the second direction.

**22.** The battery cell according to claim 20 or 21, wherein the first surface is a surface comprising a largest area among all surfaces of the housing.

**23.** The battery cell according to any one of claims 20 to 22, wherein the first electrode terminal and the second electrode terminal are provided on the two second surfaces, respectively.

**24.** The battery cell according to claim 23, wherein:

one of the second surfaces comprises a first recess part, and the other of the second surfaces comprises a second recess part; and
at least a part of the first electrode terminal is accommodated in the first recess part, and at least a part of the second electrode terminal is accommodated in the second recess part.

**25.** The battery cell according to claim 24, wherein a part of the first electrode terminal outside of the housing is completely accommodated in the first recess part, and a part of the second electrode terminal outside of the housing is completely accommodated in the second recess part.

**26.** The battery cell according to claim 24 or 25, wherein in the third direction, both ends of the first recess part extend to the two first surfaces respectively, and both ends of the second recess part extend to the two first surfaces respectively.

**27.** The battery cell according to any one of claims 20 to 22, wherein the first electrode terminal and the second electrode terminal are disposed on a same one of the first surfaces.

**28.** The battery cell according to claim 27, wherein one of the first surfaces comprises a first recess part and a second recess part which are arranged along the second direction; and
at least a part of the first electrode terminal is accommodated in the first recess part, and at least a part of the second electrode terminal is accommodated in the second recess part.

**29.** The battery cell according to claim 28, wherein a part of the first electrode terminal outside of the housing is completely accommodated in the first recess part, and a part of the second electrode terminal outside of the housing is completely accommodated in the second recess part.

**30.** The battery cell according to claim 27, wherein:

the first electrode terminal and the second electrode terminal are disposed on and protrude from the one of the first surfaces;
the other of first surfaces comprises a first recess part and a second recess part which are arranged along the second direction, wherein the first recess part is disposed opposite to the first electrode terminal in the third direction, and the second recess part is disposed opposite to the second electrode terminal in the third direction; and
in a case where a plurality of battery cells are arranged along the third direction, the first recess part is configured to accommodate a first electrode terminal of an adjacent battery cell and the second recess part is configured to accommodate a second electrode terminal of the adjacent battery cell; or, in a case where a plurality of battery cells are arranged along the third direction, the first recess part is configured to accommodate a second electrode terminal of the adjacent battery cell and the second recess part is configured to accommodate a first electrode terminal of the adjacent battery cell.

31. The battery cell according to any one of claims 28 to 30, wherein one end of the first recess part facing away from the second recess part extends to one of the second surfaces, and one end of the second recess part facing away from the first recess part extends to the other of the second surfaces.

32. The battery cell according to any one of claims 28 to 31, wherein the first recess part is connected with the second recess part.

33. The battery cell according to any one of claims 20 to 22, wherein the first electrode terminal and the second electrode terminal are disposed on the two first surfaces respectively.

34. The battery cell according to claim 33, wherein one of the first surfaces comprises a first recess part, at least a part of the first electrode terminal is accommodated in the first recess part; the second electrode terminal is disposed on and protrudes from the other of the first surfaces; and in a case where a plurality of battery cells are arranged along the third direction, the first recess part is configured to accommodate a second electrode terminal of an adjacent battery cell.

35. The battery cell according to claim 34, wherein in the second direction, at least one end of the first recess part extends to one of the second surfaces.

36. The battery cell according to any one of claims 1 to 35, wherein the housing comprises a housing body and an end cap, the housing body comprises an opening, and the end cap is disposed on and covers the opening; and
the first electrode terminal is mounted on the housing body or the end cap.

37. The battery cell according to claim 36, wherein:

the electrode unit comprises two narrower faces which are oppositely arranged along a second direction and two wider faces which are oppositely arranged along a third direction, the narrower faces respectively connect the two wider faces, and any two of the first direction, the second direction and the third direction are perpendicular to each other; and
an end of the housing body along the third direction comprises the opening, and the wider surfaces are disposed opposite to the end cap along the third direction.

38. The battery cell according to claim 37, wherein the housing body comprises a flange structure at an end close to the opening, and the flange structure is located at a side of the end cap away from the electrode unit.

39. The battery cell according to any one of claims 1 to 38, wherein a size of the battery cell along the first direction is w1, wherein 200mm≤w1≤2000mm.

40. The battery cell according to any one of claims 1 to 39, wherein a size of the first body along the first direction is w2, and a size of the second body along the first direction is w3, wherein w2 and w3 satisfy:

$$0.5 \leqslant w2/w3 \leqslant 2.$$

41. The battery cell according to claim 40, wherein the w2 and w3 satisfy: 0.95≤w2/w3≤ 1.05.

42. The battery cell according to claim 40 or 41, wherein 100mm≤w2≤1000mm.

43. A battery, comprising a plurality of battery cells according to any one of claims 1 to 42.

44. An electric device, comprising the battery cell according to any one of claims 1 to 42, wherein the battery cell is provided for supplying electric energies.

45. A method for manufacturing a battery cell, comprising:

providing an electrode unit, the electrode unit comprising a first electrode assembly and a second electrode assembly which are disposed along a first direction, wherein the first electrode assembly and the second electrode assembly are arranged in parallel, the first electrode assembly comprises a first body and a first tab connected to the first body, and the second electrode assembly comprises a second body and a second tab connected to the second body, and wherein a polarity of the first tab is the same as a polarity of the second tab, and at least a part of the first tab and at least a part of the second tab are located between the first body and the second body;
providing a housing and a first electrode terminal installed on the housing; and
installing the electrode unit in the housing, and electrically connecting the first electrode terminal with the first tab and the second tab, so as to export electric energies of the first electrode assembly and the second electrode assembly.

46. A system for manufacturing a battery cell, comprising:

**EP 4 407 756 A1**

a first providing device configured to provide an electrode unit comprising a first electrode assembly and a second electrode assembly which are disposed along a first direction, wherein the first electrode assembly and the second electrode assembly are arranged in parallel, the first electrode assembly comprises a first body and a first tab connected to the first body, and the second electrode assembly comprises a second body and a second tab connected to the second body, and wherein a polarity of the first tab is the same as a polarity of the second tab, and at least a part of the first tab and at least a part of the second tab are located between the first body and the second body;

a second providing device configured to provide a housing and a first electrode terminal installed on the housing; and

an assembling device configured to install the electrode unit in the housing, and electrically connect the first electrode terminal with the first tab and the second tab so as to export electrical energies of the first electrode assembly and the second electrode assembly.

1

Fig. 1

2

Fig. 2

6

Fig. 3

10

B ← 111 112 122 153 121

11 → 113 123 → 12

w2 w3

Y

X

Fig. 4

10

10b 13

10a 14

15

Z 10a

Y 10b

Fig. 5

13

131 132 133

Y

134 134

X

Fig. 6

Fig. 7

Fig. 8

Fig. 9

13

131　　　　　132　　133

X

Fig. 10

10

10b

13 { 13a
13b

15

14

Z

Y

10a

10b

Fig. 11

13

131　　　　132　　133

13a

13b

Fig. 12

Fig. 13

Fig.14

Fig.15

Fig.16

Fig.17

6

20b

30

112

21

20a

20a

113

40

23

Y

Z

20b

Fig.18

6

20b    H5

21

20a

30

112

20a

40

113

Y

Z

20b

Fig.19

Fig.20

Fig.21

providing an electrode unit, the electrode unit including a first electrode assembly and a second electrode assembly which are disposed along a first direction, wherein the first electrode assembly and the second electrode assembly are arranged in parallel, the first electrode assembly includes a first body and a first tab connected to the first body, and the second electrode assembly includes a second body and a second tab connected to the second body, and wherein a polarity of the first tab is the same as a polarity of the second tab, and at least a part of the first tab and at least a part of the second tab are located between the first body and the second body

S100

providing a housing and a first electrode terminal installed on the housing

S200

installing the electrode unit in the housing, and electrically connecting the first electrode terminal with the first tab and the second tab, so as to lead out electric energies of the first electrode assembly and the second electrode assembly

S300

Fig.22

90

91

First providing device

93

Assembling device

92

Second providing device

Fig.23

## INTERNATIONAL SEARCH REPORT

| International application No. |
| --- |
| **PCT/CN2021/130119** |

| | |
| --- | --- |
| **A.** | **CLASSIFICATION OF SUBJECT MATTER** |
| | H01M 50/10(2021.01)i |

According to International Patent Classification (IPC) or to both national classification and IPC

| | |
| --- | --- |
| **B.** | **FIELDS SEARCHED** |

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT; WPI; EPODOC; CNKI: 外壳, 端子, 极柱, 连接, 极耳, 并联, shell, terminal, pole, connect, ear, parallel

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 108140779 A (LG CHEMICAL LTD.) 08 June 2018 (2018-06-08) description, paragraphs 39-80, and figures 1-8 | 1-46 |
| A | CN 110021716 A (BYD CO., LTD.) 16 July 2019 (2019-07-16) entire document | 1-46 |
| A | CN 111883850 A (HEFEI GUOXUAN HIGH-TECH POWER ENERGY CO., LTD.) 03 November 2020 (2020-11-03) entire document | 1-46 |
| A | KR 20060112732 A (SAMSUNG SDI CO., LTD.) 02 November 2006 (2006-11-02) entire document | 1-46 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 July 2022** | **27 July 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/130119**

| Patent document cited in search report | | | Publication date (day/month/year) | Patent family member(s) | | | Publication date (day/month/year) |
|---|---|---|---|---|---|---|---|
| CN | 108140779 | A | 08 June 2018 | JP | 2018530879 | A | 18 October 2018 |
| | | | | US | 2018205053 | A1 | 19 July 2018 |
| | | | | PL | 3349269 | T3 | 13 December 2021 |
| | | | | EP | 3349269 | A1 | 18 July 2018 |
| | | | | WO | 2017217641 | A1 | 21 December 2017 |
| | | | | KR | 20170140694 | A | 21 December 2017 |
| CN | 110021716 | A | 16 July 2019 | CN | 110021778 | A | 16 July 2019 |
| | | | | CN | 110021777 | A | 16 July 2019 |
| | | | | TW | 201947810 | A | 16 December 2019 |
| | | | | TW | 201947811 | A | 16 December 2019 |
| | | | | CN | 110021775 | A | 16 July 2019 |
| | | | | TW | 201947798 | A | 16 December 2019 |
| | | | | CN | 110021721 | A | 16 July 2019 |
| | | | | CN | 110021719 | A | 16 July 2019 |
| | | | | CN | 110021774 | A | 16 July 2019 |
| | | | | TW | 201947803 | A | 16 December 2019 |
| | | | | CN | 110021776 | A | 16 July 2019 |
| | | | | CN | 110021779 | A | 16 July 2019 |
| | | | | TW | 201947797 | A | 16 December 2019 |
| CN | 111883850 | A | 03 November 2020 | None | | | |
| KR | 20060112732 | A | 02 November 2006 | None | | | |

Form PCT/ISA/210 (patent family annex) (January 2015)